# EUROPÄISCHE PATENTSCHRIFT

(11) **EP 2 313 267 B1**
(45) Veröffentlichungstag und Bekanntmachung des Hinweises auf die Patenterteilung: **21.02.2018**
(21) Anmeldenummer: 09780313.4
(22) Anmeldetag: 08.07.2009
(51) Int. Cl.: B32B 17/10, C03C 27/12, B32B 27/08, B32B 7/12, C09J 151/06, H01L 31/048, G02F 1/13

(54) **VERWENDUNG VON SILANMODIFIZIERTEN POLYOLEFINEN ALS HAFTVERMITTLER FÜR DIE HERSTELLUNG FLÄCHIGER LAMINATE**
USE OF SILANE-MODIFIED PLYOLEFINS AS ADHESION PROMOTERS FOR THE PRODUCTION OF FLAT LAMINATES
UTILISATION DE POLYOLÉFINES MODIFIÉES PAR SILANE, EN TANT QUE PROMOTEURS D'ADHÉRENCE POUR LA FABRICATION DE STRATIFIÉS BIDIMENSIONNELS

(30) Priorität: 15.08.2008 DE 102008041278
(43) Veröffentlichungstag der Anmeldung: 27.04.2011
(73) Patentinhaber: Evonik Degussa GmbH, 45128 Essen (DE)
(72) Erfinder: BECKER, Hinnerk Gordon, 45257 Essen (DE); ZAGEFKA, Hans-Dieter, 45721 Haltern am See (DE); WEY, Hans Günther, 45470 Mülheim (DE); SCHMIDT, Friedrich Georg, 45721 Haltern am See (DE); HOPPE, Dirk, 48301 Nottuln (DE); KOTHE, Martin, 63674 Altenstadt (DE)
(86) Internationale Anmeldenummer: PCT/EP2009/058666
(87) Internationale Veröffentlichungsnummer: WO 2010/018034

(56) Entgegenhaltungen:
- EP-A- 1 013 413
- EP-A- 1 038 663
- WO-A-2008/036222
- DE-A1- 2 650 118
- JP-A- 2007 177 034
- US-A- 5 075 382
- US-A- 6 159 608
- US-A1- 2006 134 355
- US-B1- 6 287 674

## Beschreibung

Die vorliegende Erfindung betrifft die Verwendung von mit ein oder mehreren Silanen modifizierten Polyolefinen als Haftvermittler für die Herstellung flächiger Laminate auf Basis von Glas und/oder Kunststoff, entsprechende Laminate sowie Displays enthaltend die erfindungsgemäßen Laminate.

Verbundwerkstoffe spielen in vielen Anwendungsbereichen eine zunehmende Rolle. Allgemein handelt es sich bei Verbundwerkstoffen um Werkstoffe aus zwei oder mehr verbundenen Materialien. Der Verbundwerkstoff besitzt andere Werkstoffeigenschaften als seine einzelnen Komponenten. Für die Eigenschaften der Verbundwerkstoffe sind stoffliche Eigenschaften und die Geometrie der Komponenten von Bedeutung. Insbesondere spielen oft Größeneffekte eine Rolle. Die Verbindung erfolgt durch Stoff- oder Formschluss oder eine Kombination von beidem.
Nach der Geometrie des Verbunds unterscheidet man:
- Teilchenverbundwerkstoffe, auch als Dispersionswerkstoffe bezeichnet,
- Faserverbundwerkstoffe,
- Schichtverbundwerkstoffe, auch als Laminate bezeichnet,
- Durchdringungsverbundwerkstoffe.
Schichtverbundwerkstoffe bestehen aus aufeinanderliegenden Schichten unterschiedlicher Anzahl und finden sich zahlreich in Anwendungen wie beispielsweise im Fensterbau, bei Verpackungen aber auch bei elektronischen Komponenten wie zum Beispiel Displays. Vielfach erfolgt der Verbund bei Laminaten durch Verklebung, wobei die Art der Verklebung unterschiedlich ausgeführt sein kann.

Die Verwendung von beschichteten Glasoberflächen zur Herstellung elektrischer Bauteile ist schon länger bekannt. So werden in der WO 00/05180 flexible Substrate basierend auf dünnen Glasplatten beschrieben, welche mit synthetischen Harzen beschichtet werden, und sich für den Einsatz in Licht emittierenden Bauteilen (z. B. LEDs) eignen sollen. Als Beispiele für geeignete synthetische Harze werden Polyurethanharze genannt, vorzugsweise werden 2-Komponentensysteme (2P) mit zusätzlicher UV-Härtbarkeit verwendet. Die Glasoberfläche wird vorzugsweise einer Vorbehandlung durch einen vorzugsweise in wässriger Emulsion vorliegenden Silan-Primer unterzogen, um eine Haftung des synthetischen Harzes auf der Glasoberfläche zu erzielen. Das verwendete Lösungsmittel muss entfernt werden, zusätzlich wird eine Wärmebehandlung als weiterer Prozessschritt beschrieben. Eine Verwendung von teilkristallinen Polyolefinen und/oder silanmodifizierten (teilkristallinen) Polyolefinen für die formschlüssige Verbindung von Glas- und Kunststoffscheiben wird nicht beschrieben. Bei der Verwendung von temperaturhärtenden Klebschichten besteht die Gefahr einer Schädigung von funktionellen Schichten der Laminate durch den Vernetzungsschritt (die Wärmebehandlung). Werden zusätzliche Primersysteme wie beschrieben auf Basis einer wässrigen Dispersion bzw. Emulsion appliziert, so wird damit Feuchtigkeit ins System eingebracht, die empfindliche Schichten irreversibel schädigen kann und daher vor dem nächsten Laminierschritt aufwändig entfernt werden muss. Dieser zusätzliche Schritt macht das Herstellverfahren wirtschaftlich unattraktiv. Bei der UV-Härtung können nur Materialien mit hohen Transmissionswerten zur Herstellung der Laminate verwendet werden. Zusätzlich ist eine Laminierung von Kunststofffolien auf Basis von unpolaren Polymeren insbesondere Polyolefinen mit den beschriebenen Systemen nur nach einer energetischen Vorbehandlung der Kunststoffoberflächen (Corona, Beflammung usw.) möglich, da ansonsten keine dauerhafte Haftung erhalten wird.

In der WO 99/21708 werden Glaslaminate als Grundbausteine von Halbleiterelementen sowie ein Verfahren zu ihrer Herstellung beschrieben. Die Verbindung der Laminatschichten wird entweder über die sog. Vakuumlaminierung oder unter Verwendung einer Klebschicht erreicht. Die Klebschichten werden als Schmelzkleber oder in Form von wässrigen Latices-Dispersionen aufgetragen und anschließend unter Anwendung von Druck und Temperatur ausgehärtet. Auch die Verwendung von leicht befeuchteten Gelatineschichten als Klebschicht wird beschrieben. Als Klebschichten werden auch druckempfindliche Klebschichten und Klebschichten beschrieben, welche durch Wärmestrahlung, durch Elektronenstrahlung oder UV-Strahlung aushärten. Insbesondere werden wässrige temperaturhärtende Systeme genannt. Als polymere Bindemittel innerhalb der genannten Klebschichten werden Styrol-Isopren-Blockcopolymere, Styrol-Butadien-Rubber (Elastomere), Butylrubber, Polyisobutylene, Silikone, Naturkautschuk (Gummi) und Acrylatcopolymere erwähnt. Besonders bevorzugt sind Polymere auf Basis von Alkylacrylatestern. Eine Verwendung von teilkristallinen Polyolefinen und/oder silanmodifizierten (teilkristallinen) Polyolefinen für die formschlüssige Verbindung von Glas- und Kunststoffscheiben wird nicht beschrieben. Klassische druckempfindliche Klebstoffsysteme führen nicht zu einer reaktiven Anbindung der zu verklebenden Oberflächen. Bei der Verwendung von temperaturhärtenden Klebschichten besteht die Gefahr einer Schädigung der funktionellen Schichten der Laminate durch den Vernetzungsschritt (die Wärmebehandlung). Werden diese Systeme wie beschrieben auf Basis einer wässrigen Dispersion appliziert, so wird damit Feuchtigkeit ins System eingebracht, die empfindliche Schichten irreversibel schädigen kann, und daher vor dem nächsten Laminierschritt aufwändig entfernt werden muss. Bei der UV-Härtung können nur Materialien mit hohen Transmissionswerten zur Herstellung der Laminate verwendet werden. Zusätzlich ist eine Laminierung von Kunststofffolien auf Basis von unpolaren Polymeren insbesondere Polyolefinen mit den beschriebenen Systemen nur nach einer energetischen Vorbehandlung der Kunststoffoberflächen (Corona, Beflammung usw.) möglich, da ansonsten keine dauerhafte Haftung erhalten wird. Ebenfalls beschrieben wird die Vorbehandlung der Glasoberflächen zum Aufbringen der funktionellen Schichten. Diese ist notwendig, um eine Haftung der funktionalen Schicht auf dem Glas zu ermöglichen und wird durch Ätzung bzw. Beschichtung der Glasoberfläche mit einem sog. Primer realisiert. Dieser zusätzliche Schritt macht das beschriebene Herstellverfahren wirtschaftlich unattraktiv.

Auch in der EP 1013413 werden Laminate auf Basis von dünnen Glasschichten und Kunststoffträgern beschrieben, welche elektrisch leitfähige, organische Schichten enthalten. Die Verbindung zwischen der Glasschicht und der thermoplastischen Trägerschicht wird durch sog. Vakuumlaminierung oder unter Verwendung einer Klebschicht erreicht. Als Klebschichten werden druckempfindliche Klebschichten und Klebschichten erwähnt welche durch Wärmestrahlung oder UV-Strahlung aushärten. Eine Verwendung von teilkristallinen Polyolefinen und/oder silanmodifizierten (teilkristallinen) Polyolefinen für die formschlüssige Verbindung von Glas- und Kunststoffscheiben wird nicht beschrieben. Klassische druckempfindliche Klebstoffsysteme führen nicht zu einer reaktiven Anbindung der zu verklebenden Oberflächen. Bei der Verwendung von temperaturhärtenden Klebschichten besteht die Gefahr einer Schädigung der funktionellen Schichten der Laminate durch den Vernetzungsschritt (die Wärmebehandlung). Bei der UV-Härtung können nur Materialien mit hohen Transmissionswerten zur Herstellung der Laminate verwendet werden. Zusätzlich ist eine Laminierung von Kunststofffolien auf Basis von unpolaren Polymeren insbesondere Polyolefinen mit den beschriebenen Systemen nur nach einer energetischen Vorbehandlung der Kunststoffoberflächen (Corona, Beflammung usw.) möglich, da ansonsten keine dauerhafte Haftung erhalten wird.

Die EP 1038663 beschreibt die Herstellung elektronischer "Module" unter Verwendung von Glaslaminaten. Dabei werden beschichtete Kunststofffolien, welche eine funktionelle Schicht tragen, mit flexiblen Glasscheiben laminiert, so dass die funktionellen Schichten der Kunststofffolien vor mechanischer Belastung, Wärme und oxidativem bzw. hydrolytischem Abbau geschützt werden. Als bevorzugte Anwendung werden Displays genannt. Die mit funktionellen Beschichtungen versehenen Kunststofffolien werden mit Hilfe einer umlaufenden Siegelschicht, welche auf Epoxy-, Silikon- bzw. Urethan-/Acrylat-Harzen basiert, verbunden. Bei der Laminierung der Glasschicht(en) auf die funktionalisierten Kunststofffolien wird bevorzugt die sog. Vakuumlaminierung angewendet, bei der auf die Verwendung von Klebschichten verzichtet wird. Alternativ werden beidseitige Klebebänder oder Klebschichten erwähnt, letztere auch auf Basis von Schmelzklebern welche über UV- oder Elektronenstrahlung vernetzt werden können. Auch die Verwendung von leicht befeuchteten Gelatineschichten und Polyethylenfolien als Klebschicht wird beschrieben. Eine Verwendung von teilkristallinen Polyolefinen und/oder silanmodifizierten (teilkristallinen) Polyolefinen für die formschlüssige Verbindung von Glas- und Kunststoffscheiben wird nicht beschrieben. Bei der UV-Härtung können nur Materialien mit hohen Transmissionswerten zur Herstellung der Laminate verwendet werden. Die Verwendung von Epoxy-, Silikon- bzw. Urethan-/Acrylatharzsystemen führt zu deutlich höheren Herstellkosten, was die technische Umsetzung nachhaltig behindert. Zusätzlich ist eine Laminierung von Kunststofffolien auf Basis von unpolaren Polymeren insbesondere Polyolefinen mit solchen Systemen nur nach einer energetischen Vorbehandlung der Kunststoffoberflächen (Corona, Beflammung usw.) möglich, da ansonsten keine dauerhafte Haftung erhalten wird.

Flächige biegeelastische Verbunde aus einer Glasschicht und einem Polymer, wobei sich zwischen Glas und Polymer ein Haftvermittler befindet, beschreibt auch die WO 03/055676. Als Haftvermittler werden ebenfalls wässrige, mit UV-Strahlen härtbare Dispersionen aus Polyacrylaten oder Styrol/Butadiencopolymerisaten eingesetzt. Bei der UV-Härtung können nur Materialien mit hohen Transmissionswerten zur Herstellung der Laminate verwendet werden. Außerdem muss bei der Verwendung wässriger Systeme die wässrige Komponente in einem zusätzlichen Verfahrensschritt vollständig abgetrennt werden, was den Herstellprozess kompliziert gestaltet. Weiterhin führen bereits Wasserspuren bei hydrolytisch empfindlichen Polymeren wie z. B. Polyamiden, Polyestern usw. zu einer signifikanten Verschlechterung der Lichtdurchlässigkeit (Eintrübung infolge Polymerabbau).

Ebenfalls bekannt ist, dass sich funktionalisierte, insbesondere silanfunktionalisierte Polyolefine in Klebstoffen und Verklebungen einsetzen lassen.

So werden z. B. in der WO 91/06580 silanmodifizierte ungesättigte amorphe Polymere beschrieben, die im vernetzten Zustand z. B. als Formkörper eingesetzt werden können. Als weitere Anwendungsbeispiele für die silanmodifizierten Polymere werden Klebstoffzusammensetzungen, auch von Schmelzklebstoffen genannt. Als Beispiele für ungesättigte Basis-Polymere werden gummiartige Polymere, wie z. B. Styrol-Butadien-Blockcopolymere (SBS), Styrol-Isopren-Blockcopolymere (SIS), Styrol-Butadien-Rubber (SBR), Nitril-Rubber, Polychloropren-Rubber und Butyl-Rubber genannt. Alle genannten Basispolymere weisen eine Gummielastizität (d.h. auch schlechte Verarbeitbarkeit) bzw. andere negative Materialeigenschaften (wie z. B. schlechte Wärmestandfestigkeiten) auf, die sie für Schmelzkleberanwendungen ungeeignet machen.

In der WO 89/11513 wird eine Klebstoffzusammensetzung beschrieben, die mindestens ein silanmodifiziertes bzw. silangepfropftes teilkristallines Polymer enthält. Als Basispolymere werden dabei insbesondere Homo-, Co- und Terpolymere von C₂-₆ α-Olefinen sowie isotaktische Polypropylenpolymere und Blends von Polypropylenen, insbesondere wenn sie auch ataktisches Polypropylen enthalten, genannt. Beim Pfropfen von isotaktischem Polypropylen (iPP) kommt es auf Grund der molekularen Struktur des iPP zu einem extrem schnellen und vollständigen Polymerabbau, wobei nur sehr geringe Funktionalisierungsraten erzielt werden können, die Pfropfprodukte weisen zudem einen stark wachsartigen Charakter auf. Ataktisches Polypropylen hingegen weist von sich aus einen sehr niedrigen Erweichungspunkt auf [siehe z. B.: H.-G. Elias; Makromoleküle; Bd. III; Wiley-VCH: Weinheim; 2001]. Die in der WO 89/11513 beschriebene Verfahrensweise führt zu einer Addition dieser Nachteile, und zu einer sehr schlechten Produktperformance im Hinblick auf die Materialeigenschaften. Die Einstellung von Viskosität, Schmelzverhalten und "Tack" der Klebzusammensetzung wird ursächlich auf die Verwendung längerkettiger (≥ 3 Verbindungsatome zwischen Si-Atom und der Polymerkette) Silanmonomere zurückgeführt, die zu einer "offeneren Struktur" führen sollen. Die Verwendung von längerkettigen Silanmonomeren ist in sofern nachteilig, als sie zu einer schwächeren Vernetzung durch einen höheren Polymerisationsgrad der Netzketten (d. h. der monomeren Grundeinheiten zwischen zwei Vernetzungsstellen) führt, was zusätzlich nachteilig auf die Materialeigenschaften des Pfropfpolymers auswirkt.

Weitere Beispiele finden sich in der WO 2007/002177, der WO 2007/008765 und der EP 0827994.

Auch die gute Haftung von silanmodifizierten Polyolefinen auf Glasoberflächen ist bekannt.

So beschreibt beispielsweise die WO 97/48778 eine Schmelzklebstoff-Zusammensetzung aus einem reaktiven und einem nichtreaktiven Bindemittel, wobei das reaktive Bindemittel ein silanfunktionelles Polyisobutylen, hydriertes Polybutadien oder Poly-alpha-Olefin sein kann. Die genannten Zusammensetzungen werden als Zweikomponentenklebstoff für die Herstellung von Zwei- oder Mehrscheiben-Isoliergläsern eingesetzt. Bei der beschriebenen Anwendung handelt es sich jedoch nicht um ein flächiges Laminat, ebenso wenig werden flächige Kunststoffschichten erwähnt, auch kann nicht von einer besonderen Flexibilität der hergestellten Isolierglasfenster ausgegangen werden.

Gleiches gilt für die in US 5,849,832 beschriebenen Isolierglasabdichtungen.

Der Einsatz silanmodifizierter teilkristalliner Polyolefine für den Aufbau komplexer flächiger Strukturen ist bisher nicht bekannt. Insbesondere sind die bisher bekannten silanmodifizierten teilkristallinen Polyolefine auf Grund ihrer Materialeigenschaften nur eingeschränkt in der Lage, die für die Herstellung von anspruchsvollen Verbundlaminaten (wie sie z. B. in der Unterhaltungs- und Elektroindustrie eingesetzt werden) notwendige Materialperformance zu garantieren.

Aufgabe der vorliegenden Erfindung war somit die Bereitstellung alternativer Haftvermittler für die Herstellung von Laminaten unterschiedlichster Materialien, die verbesserte Material- und Verarbeitungseigenschaften aufweisen.

Überraschenderweise wurde gefunden, dass mit Silanen modifizierte teilkristalline Polyolefine mit speziellen Materialeigenschaften als Einkomponentensystem besonders gut als Haftvermittler zur Herstellung von Laminaten geeignet sind. Insbesondere haben sich silanmodifizierte teilkristalline Polyolefine mit hohem Funktionalisierungsgrad, hohem Erweichungspunkt (im unvernetzten Zustand) und hoher Zugfestigkeit als besonders geeignet für diese Anwendungen erwiesen.

Demgemäß ist ein erster Gegenstand der vorliegenden Erfindung die Verwendung von mit ein oder mehreren Silanen modifizierten teilkristallinen Polyolefinen als Haftvermittler für die Herstellung flächiger Glas/Glas-, Glas/Kunststoff- oder Kunststoff/Kunststoff-Laminate. Als Laminate im Sinne der vorliegenden Erfindung werden alle Systeme verstanden, die aus einzelnen Schichten flächiger Körper zusammengesetzt sind.

Die Verwendung silanmodifizierter Polyolefine hat gegenüber den im Stand der Technik beschriebenen Systemen eine Reihe von Vorteilen. So ist keine zusätzliche Temperatur-, Strahlungs- und/oder UV-Härtung erforderlich, was auch die Verarbeitung von Materialien mit geringen Transmissionswerten erlaubt. Ebenso ist kein weiterer gesonderter Haftvermittler (weder für die Glas- noch für die Kunststoffoberflächen) erforderlich und der Auftrag ist einfach aus Lösung oder mittels einer Schmelze möglich. Durch den Direktauftrag der Schmelze muss im Vergleich zum Auftrag wässriger Systeme (z. B. Dispersionen und/oder Latices) kein Lösungsmittel verdampft werden. Dabei lassen sich auf Grund der spezifischen Materialeigenschaften trotzdem niedrige Verarbeitungstemperaturen von teilweise deutlich < 160 °C realisieren, so dass auch temperatursensitive Materialien verarbeitet werden können. Dies reduziert den Verarbeitungsaufwand des Herstellers der entsprechenden Verbundstoffe. Weiterhin weisen die silanmodifizierten Polyolefine gute Diffusionsbarriereeigenschaften auf, die sich durch die eintretende Vernetzung weiter verbessern. Damit ist kein zusätzliches Barrierematerial notwendig, da die Klebeschicht selbst als Barriere fungiert. In das Laminat eindringende Feuchtigkeit führt in einer Art "Selbstheilung" dazu, dass die Barrierewirkung durch Erhöhung der Vernetzungsdichte weiter verbessert wird. Ein weiterer Vorteil ist die mit den genannten Systemen mögliche Herstellung von Verbundstoffen aus unpolaren bzw. polaren und unpolaren Materialien, die mit den im Stand der Technik beschriebenen Haftvermittlern nur schwer oder gar nicht möglich ist. Eine zusätzliche Oberflächenbehandlung von Glas- und/oder Kunststoffoberflächen (z. B. durch Plasma- oder Coronabehandlung) kann entfallen. Weiterhin lassen sich erfindungsgemäße biegeelastische Systeme herstellen, da trotz einer Vernetzung die Elastizität der Systeme erhalten bleibt, bzw. je nach gewähltem silanmodifizierten teilkristallinen Polyolefin sogar erhöht wird. Die Silanfunktionen der silanmodifizierten Polyolefine ermöglichen eine feste (chemische) Anbindung der Polyolefine an die Oberflächen, insbesondere Glasoberflächen, ohne dass ein zusätzlicher Prozessschritt notwendig wird. Im Gegensatz zu Urethanklebern sind die silanmodifizierten Polyolefine auch toxikologisch unbedenklich, da sie isocyanatfrei sind, und eignen sich somit für eine weitaus größere Bandbreite an Anwendungen.

Wesentlicher Kern der vorliegenden Erfindung ist die Verwendung von mit ein oder mehreren Silanen modifizierten Polyolefinen als Haftvermittler für die Herstellung flächiger Glas/Glas-, Glas/Kunststoff- oder Kunststoff/KunststoffLaminate. Vorzugsweise sind die Glas/Glas-, Glas/Kunststoff- oder Kunststoff/Kunststoff-Laminate flexibel. Der speziell ausgewählte Haftvermittler erlaubt die Beibehaltung der Flexibilität der Laminate, da dieser, auch nach Vernetzung, elastisch ist. Insbesondere wird durch die erfindungsgemäßen modifizierten Polyolefine die Herstellung von flexiblen Laminaten unter Verwendung von sehr dünnen Glas-"scheiben" ermöglicht, die trotz ihrer geringen Schichtdicke bei einer Biegebelastung nicht zerstört und/oder beschädigt werden. Dies wird unter anderem dadurch erreicht, dass die erfindungsgemäß eingesetzten Polymere selbst eine sehr effektive Wasserdampf- und Gasbarriere darstellen, die durch Feuchtigkeitsvernetzung (so zum Beispiel auch beim Eindringen von Feuchtigkeit in das Laminat) weiter verstärkt wird. Dadurch kann die Schichtdicke der verwendeten Glasschicht deutlich geringer ausfallen, was das Gewicht der entsprechenden Bauteile vermindert. Zusätzlich weisen die dünneren Glasschichten eine deutlich erhöhte Biegeelastizität auf, insbesondere wenn sie formschlüssig mit einer ebenfalls biegeelastischen Polymerschicht (z. B. einer Polymerfolie) verbunden werden. Ein weiterer Vorteil der erfindungsgemäß eingesetzten Polymere ist, dass sie gleichzeitig auch als Haftvermittler für funktionelle Beschichtungen von Glas- und/oder Kunststoffoberfläche(n) dienen können, so dass eine zusätzliche Oberflächenbehandlung (z. B. durch Ätzen, Corona, Plasma usw.) entfällt.

Das Polyolefin ist erfindungsgemäß ein Terpolymer aus 1 bis 22 Gew.-%, bevorzugt 2 bis 20 Gew.-% und insbesondere bevorzugt aus 3 bis 18 Gew.-% Ethen, 1 bis 85 Gew.-%, bevorzugt 5 bis 78 Gew.-% und insbesondere bevorzugt 10 bis 75 Gew.-% Propen und 7 bis 98 Gew.-%, bevorzugt 10 bis 95 Gew.-% und insbesondere bevorzugt 12 bis 90 Gew.-% eines Olefins mit 4 - 10 Kohlenstoffatomen. Weiterhin bevorzugt sind die Polyolefine teilkristallin, es handelt sich also insbesondere um teilkristalline Poly-alpha-Olefine.
Hochkristalline Polyolefine weisen einen hohen Ordnungsgrad bezüglich der Mikrostruktur der Polymerketten auf, und zeichnen sich durch eine hohe Schmelzenthalpie sowie durch hohe Schmelztemperaturen aus. So liegt beispielsweise für 100%-iges isotaktisches Polypropylen die berechnete Schmelztemperatur bei 185°C und die Schmelzenthalpie bei ca. 207 J/g (J.Bicerano; J.M.S.; Rev.Macromol.Chem.Phys.; C38 (1998); 391ff). Als Homopolymer weist es allerdings eine relativ geringe Kältebeständigkeit sowie eine hohe Sprödigkeit und eine schlechte Heißsiegelbarkeit beziehungsweise Verschweißbarkeit auf. Die Zugfestigkeit (Bruch) liegt bei ca. 30 MPa, wobei so gut wie keine Reißdehnung auftritt (H.-G. Elias; Makromoleküle; Bd. III; Wiley-VCH; Weinheim; 2001). Der Anteil von xylollöslichen Bestandteilen liegt bei isotaktischem Poly(propylen)-Homopolymer welches durch Metallocenkatalyse gewonnen wurde üblicherweise bei deutlich < 1ma-%, bei random-Copolymeren mit Ethylen werden je nach Ethylenanteil xylollösliche Anteile von maximal 5 ma-% gefunden (W.Spaleck in: "Metallocene based Polyolefins"; J. Scheirs, W. Kaminsky (Hrsg.); J.Wiley & Sons; Weinheim; 1999).
Nicht kristalline, vollständig amorphe Polyolefine zeigen hingegen keinen Schmelzpunkt sondern einen Erweichungsbereich und weisen im Extremfall keine detektierbare Schmelzenthalpie auf. So weist beispielsweise ataktisches Polypropylen einen niedrigen Erweichungspunkt, eine niedrige Dichte und eine gute Löslichkeit in organischen Lösungsmitteln auf. Klassisches ataktisches Polypropylen (aPP) zeichnet sich durch eine sehr breite Molekulargewichtsverteilung aus, die einerseits zu einem breiten Schmelzbereich führt, und andererseits hohe niedermolekulare Anteile mit sich bringt, die mehr oder weniger stark zur Migration neigen. aPP hat eine sehr geringe Zugfestigkeit von ca. 1 MPa, weist aber andererseits eine sehr hohe Reißdehnung von bis zu 2.000 % auf (H.-G. Elias; Makromoleküle; Bd. III; Wiley-VCH; Weinheim; 2001).
Teilkristalline Polyolefine, insbesondere teilkristalline Polyolefine gemäß der vorliegenden Erfindung, liegen zwischen diesen Extremen. Insbesondere zeichnen sich teilkristalline Polyolefine gemäß der vorliegenden Erfindung dadurch aus, das sie bei der ersten und/oder zweiten Aufheizung in der Differentialkalorimetrie (DSC) bevorzugt mindestens einen Schmelzpeak sowie eine charakteristische Schmelzenthalpie aufweisen, die nie höher als 50 %, bevorzugt nie höher als 40 %, besonders bevorzugt nie höher als 30 % und insbesondere bevorzugt nie höher als 25 % des theoretisch für rein isotaktisches Polypropylen berechneten Wertes (J.Bicerano; J.M.S.; Rev.Macromol.Chem.Phys.; C38 (1998); 391ff) liegt.
Das Olefin mit 4 bis 10 Kohlenstoffatomen kann in einer besonderen Ausführungsform ausgewählt sein aus der Gruppe umfassend 1-Buten, 1-Penten, 1-Hexen, 1-Octen, 1-Decen, 3-Methyl-1-buten, 3-Methyl-1-hexen, 3-Methyl-1-hepten, 4-Methyl-1-penten und/oder 6-Methyl-1-hepten. Vorzugsweise ist das alpha-Olefin mit 4 bis 10 Kohlenstoffatomen ausgewählt aus der Gruppe umfassend 1-Buten, 1-Hexen und/oder 1-Octen.
Die Herstellung der Terpolymere erfolgt durch Polymerisation der genannten Monomere in den genannten Mengen.

Die erfindungsgemäßen Polymere sind beispielsweise durch Polymerisation von Propylen mit Ethylen und 1-Buten und/oder weiteren alpha-Olefinen mit 4 bis 10 Kohlenstoffatomen mit einem TiCl₃ • (AlCl₃)ₙ-Mischkatalysator (n = 0,2 bis 0,5) erhältlich, wobei eine Trialkylaluminiumverbindung als Cokatalysator eingesetzt wird. Das Monomer Ethen wird gasförmig eingesetzt, während die Monomere Propen und 1-Buten sowohl gasförmig als auch flüssig eingesetzt werden können. Als Molmassenregler kann beispielsweise gasförmiger Wasserstoff verwendet werden. Die Polymerisation wird bevorzugt in einem inerten Lösungsmittel durchgeführt, welches z. B. aus der Gruppe der aliphatischen Kohlenwasserstoffe ausgewählt ist. Eine Polymerisation im vorgelegten Monomer ist ebenfalls möglich. Die Reaktionstemperatur liegt zwischen 30 und 200 °C. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss z. B. von Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite und/oder aromatische Amine enthalten, zum Einsatz kommen, insbesondere Ester des Pentaerythrits wie z. B. Tetrakis(methylen-3,5-ditertbutyl-4-hydroxyhydrocinnamat)methan (Handelsname IRGANOX 1010) und/oder 2,4,8,10,Tetraoxa-3,9-diphosphaspiro-3,9,bisoctadecyloxy[5,5]undecan (Handelsname: WESTON 618). Besonders bevorzugt werden nur solche Stabilisatoren eingesetzt, die nur eine hydrolytisch aktive Endgruppe enthalten. Die wirksame Menge an Stabilisatoren liegt dabei im Bereich von 0,1 bis 2 Gew.-%, bezogen auf das Polymer.

Die genannten Terpolymere sind mit ein oder mehreren Silanen modifiziert, d.h. die Silane sind auf das Terpolymer aufgepfropft.
Das aufzupropfende Silan besitzt vorzugsweise olefinische Doppelbindungen sowie eine bis drei direkt mit dem Siliciumatom verbundene Alkoxygruppen. Insbesondere sind die ein oder mehreren Silane ausgewählt aus der Gruppe umfassend Vinyltrimethoxysilan (VTMO), Vinyltriethoxysilan, Vinyl-tris(2-methoxy-ethoxy)silan, 3-Methacryloxypropyltrimethoxysilan (MEMO; H₂C=C(CH₃)COO(CH₂)₃-Si(OCH₃)₃), 3-Methacryloxypropyltriethoxysilan, Vinyldimethylmethoxysilan und/oder Vinylmethyldibutoxysilan. Ganz besonders bevorzugt ist das Silan Vinyltrimethoxysilan.

Die ein oder mehreren Silane können auf das Basispolymer nach allen Methoden des Standes der Technik aufgepfropft werden, beispielsweise in Lösung oder bevorzugt in der Schmelze, wobei ein Radikalspender in ausreichender Menge eingesetzt wird. Eine geeignete Arbeitsweise kann der DE-OS 40 00 695 entnommen werden, auf die ausdrücklich Bezug genommen wird. Beispielsweise können folgende Radikalspender verwendet werden: Diacylperoxide wie z. B. Dilaurylperoxid oder Didecanoylperoxid, Alkylperester wie z. B. tert-Butylperoxy-2-ethylhexanoat, Perketale wie z. B. 1,1-Di(tert-butylperoxy)-3,3,5-trimethylcyclohexan oder 1,1-Di(tert-butylperoxy)cyclohexan, Dialkylperoxide wie z. B. tert-Butylcumylperoxid, Di(tert.butyl)peroxid oder Dicumylperoxid, C-Radikalspender wie z. B. 3,4-Dimethyl-3,4-diphenylhexan oder 2,3-Dimethyl-2,3-diphenylbutan sowie Azoverbindungen wie z. B. Azobisisobutyronitril, 2,2'-Azo-di(2-acetoxypropan) usw.

In einer besonderen Ausführungsform handelt es sich um ein Lösungsverfahren, wobei aliphatische und/oder aromatische Kohlenwasserstoffe sowie cyclische Ether als Lösungsmittel eingesetzt werden können. Besonders bevorzugt wird als Lösungsmittel mindestens ein aromatischer Kohlenwasserstoff eingesetzt. Geeignete aromatische Kohlenwasserstoffe sind insbesondere Trichlorbenzol, Dichlorbenzol, Toluol und Xylol, besonders bevorzugt wird Xylol eingesetzt. Besonders bevorzugte aliphatische Kohlenwasserstoffe sind beispielsweise Propan, n-Butan, Hexan, Heptan, Cyclohexan und Octan. Besonders bevorzugter cyclischer Ether ist Tetrahydrofuran (THF).

Werden Ether, insbesondere cyclische Ether als Lösungsmittel verwendet, so müssen der verwendete Initiator sowie die Prozessparameter (z. B. Temperatur, Druck, Verweilzeiten usw.) mit besonderer Sorgfalt (aus)gewählt werden, um die Bildung von explosiven Peroxiden der verwendeten Ether zu unterbinden bzw. zu kontrollieren. Insbesondere ist der zusätzliche Einsatz spezieller Inhibitoren (z. B. IONOL) zu erwägen.

Im Fall eines Pfropfprozesses in Lösung liegt die Konzentration des eingesetzten Basispolymers bei mindestens 10 ma-%, bevorzugt bei mindestens 15 ma-%, besonders bevorzugt bei mindestens 20 ma-% und insbesondere bevorzugt bei mindestens 22,5 ma-%. Die Reaktionstemperatur des Pfropfprozesses in Lösung liegt bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z. B. als Granulat, Pulver usw.) im verwendeten Lösungsmittel gelöst. Alternativ dazu wird direkt eine konditionierte Polymerisationslösung aus dem Herstellverfahren des Basispolymers verwendet, und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d. h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter-gemeinsam oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig sind, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z. B. diskontinuierlicher Knetreaktoren ist ebenfalls möglich, und insbesondere bei niedrigen Reaktionstemperaturen und/oder hohen Polymerkonzentrationen bevorzugt.

Im Fall einer kontinuierlichen Reaktionsführung wird zunächst in einem oder mehreren Vorlagebehältern (z. B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z. B. in Form von Pulver, Granulat, Pellets usw.) zusammen mit mindestens einem Lösungsmittel kontinuierlich in eine (ein- oder mehrwellige) Schneckenmaschine oder einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z. B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden mehrwellige Extruder eingesetzt. Insbesondere bevorzugt zur kontinuierlichen Herstellung der erfindungsgemäßen modifizierten Polymere in Lösung ist die Verwendung einer Reaktorkombination aus Strömungsrohr, Strömungsrohr mit Zwangsförderung und kontinuierlichem Rührkessel, wobei bevorzugt entweder im Strömungsrohr mit Zwangsförderung oder im kontinuierlichen Rührkessel auch die Entfernung von Restmonomeren und flüchtigen Neben-/ Abbauprodukten erfolgt.
Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter. Die Reaktionstemperatur des Pfropfprozesses in der Schmelze liegt bei 160 bis 250 °C, bevorzugt bei 165 bis 240 °C, besonders bevorzugt bei 168 bis 235 °C und insbesondere bevorzugt bei 170 bis 230 °C.
Die Schmelzepfropfung erfolgt entweder in diskontinuierlicher oder in kontinuierlicher Fahrweise. Im Fall einer diskontinuierlichen Reaktionsführung wird das feste Polymer (z. B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomere(en) und Radikalstarter(n).
In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d. h. mehr Pfropfreaktion und weniger Kettenspaltung) ausfällt.
In einer weiteren besonders bevorzugten Ausführungsform wird die Polymerschmelze vorgelegt und homogenisiert, während Monomer(e) und Radikalstarter gemeinsam oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.
Im Fall einer kontinuierlichen Reaktionsführung wird zunächst in einem oder mehreren Vorlagebehältern (z. B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z. B. in Form von Pulver, Granulat, Pellets usw.) kontinuierlich in eine (ein- oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z. B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden mehrwellige Extruder eingesetzt. Insbesondere bevorzugt zur kontinuierlichen Herstellung der erfindungsgemäßen modifizierten Polymere in der Schmelze ist die Verwendung einer Reaktorkombination aus Strömungsrohr, Strömungsrohr mit Zwangsförderung und kontinuierlichem Rührkessel, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Die eingesetzten unvernetzten Polyolefine zeichnen sich dadurch aus, dass die durch Oszillationsrheometrie bei 1 Hz und einer Deformation von maximal 1% bestimmte Schmelzviskosität bei 190 °C 1 000 - 150 000 mPa*s, vorzugsweise 1 500 -145 000 mPa*s, besonders bevorzugt 2 000 bis 125 000 mPa*s und insbesondere bevorzugt 2 500 bis 100 000 mPa*s beträgt, wobei weitere Vorzugsbereiche zwischen 2 500 und 10 000 mPa*s, zwischen 5 000 und 25 000 mPa*s, zwischen 10 000 und 45 000 mPa*s und zwischen 40 000 und 80 000 mPa*s liegen.
Der Erweichungspunkt des unvernetzten Polyolefins, gemessen mittels Ring & Kugel-Methode, beträgt 80 - 170 °C, vorzugsweise - 85 bis 168 °C, besonders bevorzugt 87 bis 165 °C und insbesondere bevorzugt 90 bis 162 °C, wobei weitere Vorzugsbereiche zwischen 90 und 115 °C, zwischen 110 und 135 °C und zwischen 120 und 155 °C liegen. In einer besonderen Ausführungsform, wenn als Polymere Polypropylenco-/terpolymere mit einem Comonomeranteil von < 10 ma-% verwendet werden, liegt der mittels Ring & Kugel-Methode gemessene Erweichungspunkt der eingesetzten Polyolefine zwischen 120 und 170 °C bevorzugt zwischen 125 und 168 °C, besonders bevorzugt zwischen 130 und 165 °C und insbesondere bevorzugt zwischen 140 und 160 °C. In einer weiteren besonderen Ausführungsform, wenn als Polymere Poly(1-buten)co-/terpolymere mit einem Comonomeranteil von < 10 ma-% verwendet werden, liegt der mittels Ring & Kugel-Methode gemessene Erweichungspunkt der geeigneten Polyolefine zwischen 90 und 140 °C, bevorzugt zwischen 95 und 135 °C, besonders bevorzugt zwischen 100 und 130 °C und insbesondere bevorzugt zwischen 105 und 128 °C.
Die Nadelpenetration der unvernetzten Polyolefine beträgt zwischen 1 und 50 *0,1 mm, bevorzugt zwischen 3 und 45*0,1 mm, besonders bevorzugt zwischen 5 und 40*0,1 mm, wobei weiteren Vorzugsbereiche zwischen 3 und 12*0,1 mm, zwischen 10 und 25*0,1 mm, zwischen 15 und 35*0,1 mm und zwischen 20 und 40*0,1 mm liegen. In einer besonderen Ausführungsform, wenn als Polymere Polypropylenco-/terpolymere bzw. Poly(1-buten)co-/terpolymere mit einem Comonomeranteil von < 10 ma-% verwendet werden, liegt die Nadelpenetration der Polyolefine bei maximal 16*0,1 mm, bevorzugt bei maximal 14*0,1 mm, besonders bevorzugt bei maximal 12*0,1 mm und insbesondere bevorzugt zwischen 1 und 10*0,1 mm. In einer weiteren besonderen Ausführungsform, wenn als Polymere Poly(1-buten)co-/terpolymere bzw. Poly(1-buten)co-/terpolymere mit einem Comonomeranteil von > 30 ma-% verwendet werden, liegt die Nadelpenetration der einsetzbaren Polyolefine bei mindestes 15*0,1 mm, bevorzugt bei mindestens 17*0,1 mm, besonders bevorzugt bei mindestens 19*0,1 mm und insbesondere bevorzugt bei 20 bis 45* 0,1 mm.
Die mittels DSC (Differentialkalormetrie) beim 2.Aufheizen bestimmte Glasübergangstemperatur der unvernetzten Polyolefine beträgt zwischen -5 und -65 °C, bevorzugt zwischen -7 und -62 °C, besonders bevorzugt zwischen -8 und -60 °C und insbesondere bevorzugt zwischen -10 und -58 °C wobei weitere Vorzugsbereiche zwischen -10 und -28 °C, zwischen -25 und - 45 °C und zwischen -32 und -50 °C liegen. In einer besonderen Ausführungsform, wenn als Polypropylenco-/terpolymere mit einem Comonomeranteil von < 10 ma-% verwendet werden liegt die mittels DSC (Differentialkalormetrie) beim 2.Aufheizen bestimmte Glasübergangstemperatur der unvernetzten Polyolefine zwischen 0 und - 15 °C bevorzugt zwischen -2 und -14 °C und insbesondere bevorzugt zwischen -5 und -13 °C. In einer weiteren besonderen Ausführungsform, wenn als Polymere Poly(1-buten)co-/terpolymere mit einem Comonomeranteil von < 10 ma-% verwendet werden liegt die mittels DSC (Differentialkalormetrie) beim 2. Aufheizen bestimmte Glasübergangstemperatur der unvernetzten Polyolefine zwischen - 20 und -48 °C, bevorzugt zwischen -22 und -46 °C und insbesondere bevorzugt zwischen -25 und -45 °C. In einer weiteren besonderen Ausführungsform, insbesondere wenn 1-Octen als Comonomer eingesetzt wird, liegt die mittels DSC (Differentialkalormetrie) beim 2.Aufheizen bestimmte Glasübergangstemperatur der unvernetzten Polyolefine bei maximal -35 °C, bevorzugt bei maximal -40 °C, besonders bevorzugt bei maximal -45 °C und insbesondere bevorzugt bei weniger als -48 °C.
Die mittels DSC (Differentialkalormetrie) beim 2. Aufheizen bestimmte Schmelzenthalpie der unvernetzten Polyolefine beträgt maximal 30 J/g, bevorzugt zwischen 1 und 28 J/g, besonders bevorzugt zwischen 2 und 25 J/g und insbesondere bevorzugt zwischen 3 und 23 J/g, wobei weitere Vorzugsbereiche zwischen 3 und 9 J/g, zwischen 5 und 15 J/g und zwischen 12 und 21 J/g liegen.
Die Löslichkeit der unvernetzten Polyolefine in Xylol bei Raumtemperatur liegt bei mindestens 55 ma-%, bevorzugt bei mindestens 60 ma-%, besonders bevorzugt bei mindestens 65 ma-% und insbesondere bevorzugt zwischen 68 und 99,9 ma-%, wobei weitere Vorzugsbereiche zwischen 70 und 85 ma-%, zwischen 80 und 95 ma-% und zwischen 85 und 99 ma-% liegen. In einer besonderen Ausführungsform, insbesondere wenn mittels DSC (Differentialkalormetrie) beim 2.Aufheizen bestimmte Schmelzenthalpie der unvernetzten Polyolefine bei weniger als 2 J/g liegt beträgt die Löslichkeit der eingesetzten Polyolefine in Xylol bei Raumtemperatur mehr als 98 ma-%, bevorzugt mehr als 99 ma-% und insbesondere 100 ma-%, d. h. die Polymere sind vollständig löslich.
Die Löslichkeit der unvernetzten Polyolefine in Tetrahydrofuran bei Raumtemperatur liegt bei mindestens 10 ma-%, bevorzugt bei mindestens 12 ma-%, besonders bevorzugt bei mindestens 14 ma-% und insbesondere bevorzugt bei 15 bis 100 ma-%, wobei weitere Vorzugsbereiche zwischen 15 und 35 ma-%, zwischen 30 und 65 ma-%, zwischen 50 und 85 ma-% und zwischen 80 und 99 ma-% liegen. In einer besonderen Ausführungsform, insbesondere, wenn der durch Ring&Kugel-Methode bestimmte Erweichungspunkt der verwendeten Polyolefine bei > 150 °C liegt, liegt die Löslichkeit der Polymere in Tetrahydrofuran bei Raumtemperatur bevorzugt bei maximal 70 ma-%. In der besonders bevorzugten Ausführungsform, insbesondere, wenn das eingesetzte Polyolefin einen Propylenanteil von mindestens 50 ma-% und maximal 80 ma-% aufweist, liegt die Löslichkeit der Polymere in Tetrahydrofuran bei Raumtemperatur bevorzugt bei mindestens 70 ma-%. In einer erfindungsgemäßen besonderen Ausführungsform, wenn als Polymere Poly(1-buten)co-/terpolymere mit einem Comonomeranteil von < 10 ma-% verwendet werden, liegt die Löslichkeit der Polymere in Tetrahydrofuran bei Raumtemperatur bei maximal 50 ma-%, bevorzugt bei maximal 45 ma-%, besonders bevorzugt bei maximal 40 ma-% und insbesondere bevorzugt zwischen 5 und 38 ma-%.

Die erfindungsgemäß eingesetzten Polyolefine weisen (nach vollständiger Abtrennung von unreagiertem Restmonomer) einen durch RFA-Spektroskopie (Röntgenfluoreszenzspektroskopie) bestimmten Siliziumgehalt von mindestens 0,3 ma-%, bevorzugt von mindestens 0,35 ma-%, besonders bevorzugt von mindestens 0,4 ma-% und insbesondere bevorzugt von 0,45 - 2 ma-% auf, wobei weitere besonders bevorzugte Bereiche zwischen 0,5 und 0,75 ma-%, zwischen 0,7 und 0,95 ma-%, zwischen 0,8 und 1,25 ma-% und zwischen 1,1 und 2 ma-% liegen.
Ein weiterer Gegenstand der vorliegenden Erfindung sind Laminate umfassend mindestens einen flächigen Glaskörper, welcher zumindest auf einer Seite einen darauf aufgebrachten flächigen Glas- und/oder Kunststoffkörper aufweist, wobei zwischen dem Glaskörper und dem darauf aufgebrachten flächigen Glas- und/oder dem Kunststoffkörper und/oder zwischen dem Kunststoffkörper und gegebenenfalls einem oder mehreren weiteren Kunststoffkörpern eine Zwischenschicht aus einem oder mehreren mit ein oder mehreren Silanen modifizierten Polyolefin als Haftvermittler vorliegt.
Alternative erfindungsgemäße Laminate umfassen mindestens einen flächigen Kunststoffkörper eines ersten Kunststoffs, welcher zumindest auf einer Seite mindestens einen weiteren flächigen Kunststoffkörper des gleichen oder eines vom ersten Kunststoffs verschiedenen Kunststoffs aufweist, wobei zwischen dem Kunststoffkörper des ersten Kunststoffs und dem weiteren Kunststoffkörper eine Zwischenschicht aus einem oder mehreren mit ein oder mehreren Silanen modifizierten Polyolefin als Haftvermittler vorliegt.
Um ein flexibles Laminat zu erhalten, handelt es sich bei den Glas- und/oder Kunststoffkörpern vorzugsweise um flexible Glas- oder Kunststoffkörper.
Die Glas- oder Kunststoffkörper der erfindungsgemäßen Laminate sind flächig, das heißt die räumliche Ausdehnung der Körper in einer Raumrichtung ist größer als in den anderen. Insbesondere handelt es sich bei den flächigen Körpern um entsprechende Platten, Schichten, Folien und/oder Scheiben.

Die Dicke der Glas- und/oder Kunststoffkörper beträgt maximal 8 mm, bevorzugt maximal 6 mm, besonders bevorzugt maximal 4 mm und insbesondere bevorzugt maximal 2 mm, wobei weitere Vorzugsbereiche zwischen 0,9 und 1,9 mm, 0,2 bis 1,0 mm, 0,01 bis 0,5 mm und 0,001 bis 0,05 mm liegen.
Die in den Laminaten enthaltenen mit Silanen modifizierten Polyolefine sind bereits vorab beschrieben. Die Dicke der Zwischenschicht aus einem oder mehrerer mit ein oder mehreren Silanen modifizierter Polyolefine beträgt maximal 6,5 mm, bevorzugt maximal 4 mm, besonders bevorzugt maximal 2 mm und insbesondere bevorzugt maximal 1 mm, wobei weitere Vorzugsbereiche zwischen 0,55 und 1,25 mm, zwischen 0,1 und 0,75 mm, zwischen 0,01 und 0,2 mm, zwischen 0,005 und 0,015 mm und zwischen 0,001 und 0,005 mm liegen.
Bevorzugt ist die Zwischenschicht dünner als der Glas- bzw. Kunststoffkörper auf den sie aufgebracht wird. Insbesondere beträgt das Verhältnis der Dicke des Glas- bzw. Kunststoffkörpers zur Schichtdicke der Zwischenschicht maximal 1 : 0,75, bevorzugt maximal 1 : 0,5, besonders bevorzugt maximal 1 : 0,1 und insbesondere bevorzugt maximal 1 : 0,01.

Als Glaskörper eignen sich grundsätzlich alle dem Fachmann bekannten Arten von Gläsern, beispielsweise Flachglas, Floatglas, Walzglas (z. T. auch Gussglas genannt), Ziehglas, A-Glas (alkalihaltig) E-Glas (elektrisch isolierend) C-Glas (chemisch beständig) S-Glas (hochfestes Glas) R-Glas (hochfestes Glas) HM-Glas, AR-Glas (alkaliresistentes Glas), Phosphatglas und/oder Quarzglas. Vorzugsweise handelt es sich bei dem Glas um Natrium-Floatglas und/oder Borosilikatglas, das vorzugsweise zur Herstellung von Displays eingesetzt wird. Insbesondere kommen auch Gläser mit Oberflächenvergütung (z. B. auf Basis von Metalloxiden) zum Einsatz, insbesondere mit einer Oberflächenvergütung, bei der ein chemischer lonenaustausch (z. B. Natrium gegen Kaliumionen im sog. Natrium Lime-Silica Glass) erfolgt.

Der Kunststoff des Kunststoffkörpers kann ausgewählt sein aus Polypropylen (z. B. isotaktisch oder syndiotaktisch), Poly(1-buten) (z. B. isotaktisch oder syndiotaktisch), Polyethylen (z. B. HDPE, LDPE, LLDPE usw.), Copolymeren aus Cycloolefinen und 1-Olefinen (z. B. Dicyclopentadien und/oder Norbornen und Ethylen), Poly(3-methyl-1-buten), Poly(3-methyl-1-penten), Poly(methylmethacrylat), Polyalkylmethacrylatcopolymeren, Polycarbonat, Polystyrol, Poly(vinylacetat), Celluloseacetat, Poly(ethersulfon), Poly(etherketon), (Co)polyestern (wie z. B. Poly(ethylen terephthalat)) und (Co)polyamiden, wobei je nach gewünschter Anwendung sowohl klare, lichtdurchlässige Kunststoffe als auch transparente eingefärbte Kunststoffe, als auch opake und/oder lichtundurchlässige farblose und/oder eingefärbte Kunststoffe verwendet werden können. In einer besonderen Ausführungsform hängt die Durchlässigkeit des verwendeten Kunststoffkörpers vom Blickwinkel des Betrachters ab. In einer weiteren besonderen Ausführungsform handelt es sich um bedruckte und/oder beschichtete flächige Kunststoffkörper, insbesondere um Kunststofffolien. Vorzugsweise werden transparente Kunststoffkörper verwendet. Insbesondere ist der Kunststoff ausgewählt aus Polypropylen, Polyethylen, Poyl(ethylen-co-norbornen), Poly(methylmethacrylat), Polycarbonat und Poly(propylen)copolymeren.

In einer weiteren Ausführungsform der vorliegenden Erfindung können auf den Laminaten weitere Schichten vorliegen. Diese können auf einer oder beiden Seiten der Laminate vorliegen. Bei den zusätzlichen Schichten kann es sich beispielsweise um Schichten mit flüssigkristalliner Orientierbarkeit, um Polarisationsschichten (z. B. zur Erzeugung von monochromatischem Licht), um Schichten die bestimmte Licht-Wellenlängen absorbieren und/oder streuen, um Antireflexschichten, Sol-Gel-Schichten und/oder andere Formen von Oberflächenvergütung und/oder Oberflächenbeschichtungen handeln, die beispielsweise zur Entspiegelung, Härtung, Satinierung, (chemischen und/oder korrosiven) Passivierung und/oder zur Herstellung einer elektrischen Leitfähigkeit, einer Elektrolumineszenz, oder einer Phosphoreszenz der entsprechenden Schicht(en) eingesetzt werden. Die Art und Anzahl der genannten zusätzlichen Schichten ist grundsätzlich nicht limitiert, das heißt es können auch mehrere der besagten Schichten auf den Laminaten aufgebracht sein. Beispiele für das Aufbringen von Schichten, die sich zur Herstellung einer elektrischen Leitfähigkeit innerhalb des Laminatverbundes eignen sind z. B. jene umfassend Calcium, Aluminium, Silizium, Barium, Ruthenium, Magnesium-Silber-Legierungen, Indium-Zinn-Oxid (ITO), Poly(3,4-ethylendioxythiophen)/Polystyrolsulfonat-Mischungen, Aluminium-tris(8-hydroxychinolin), Poly(paraphenylen-vinyliden), Poly(hydroxyamidether), Lithiumfluorid, Cäsiumfluorid und/oder Silber. Die weiteren Schichten können auch flexible keramische Schichten enthalten, z. B. keramische Membranen.
In einer weiteren besonderen Ausführungsform kann das erfindungsgemäße Glas- bzw. Kunststofflaminat auch dünne metallische Schichten enthalten, insbesondere solche auf Basis von Übergangsmetallen, Nichteisenmetallen und/oder Edelmetallen. Diese können sowohl über eine Beschichtungstechnologie (z. B. PVD- bzw. CVD-Technik) aufgebracht werden, als auch in Form einer Folie vorliegen. Insbesondere sind die Metalle ausgewählt aus Gold, Silber, Platin, Palladium, Kupfer, Nickel, Cobalt, Zink, Eisen, Chrom, Molybdän, Wolfram, Vanadium, Titan, Zirkonium, Aluminium, Silizium, Germanium, Zinn, Blei und/oder deren Legierungen. Auch die Verwendung von dotierten Metallschichten ist möglich. Ganz besonders bevorzugt sind die Metalle Kupfer, Aluminium, Silizium, Germanium, Eisen und/oder deren Legierungen.
Ein weiterer Gegenstand der vorliegenden Erfindung sind Verfahren zur Herstellung der erfindungsgemäßen Laminate, wobei auf mindestens einer Seite mindestens eines flächigen Glaskörpers eine Zwischenschicht aus einem oder mehreren mit ein oder mehreren Silanen modifizierten Polyolefin als Haftvermittler aufgetragen wird, und auf die mindestens eine Zwischenschicht anschließend mindestens ein flächiger Glas- oder Kunststoffkörper aufgebracht wird.

Zur Herstellung der alternativen erfindungsgemäßen Laminate wird auf mindestens einer Seite mindestens eines flächigen Kunststoffkörpers eines ersten Kunststoffs eine Zwischenschicht aus einem oder mehreren mit ein oder mehreren Silanen modifizierten Polyolefinen als Haftvermittler aufgetragen, und auf die Zwischenschicht anschließend mindestens ein weiterer flächiger Kunststoffkörper des gleichen oder eines vom ersten Kunststoffs verschiedenen Kunststoffs aufgebracht.

Die genannte Zwischenschicht, die erfindungsgemäß als Haftvermittler wirkt, kann in Form einer Lösung oder einer Schmelze aufgetragen werden. Der Auftrag der Zwischenschicht kann dabei auf allen dem Fachmann bekannten Arten erfolgen, beispielsweise durch Sprühauftrag, Spincoating, Rakelauftrag, Rollenauftrag und/oder durch Drucktechniken.

Erfolgt der Auftrag in Form einer Lösung so können als Lösungsmittel cyclische und/oder lineare aliphatische und/oder aromatische Kohlenwasserstoffe mit oder ohne Heteroatome verwendet werden, auch entsprechende halogenierte Kohlenwasserstoffe. Vorzugsweise werden aber keine halogenierten Kohlenwasserstoffe verwendet. Besonders bevorzugt wird Xylol eingesetzt. In der entsprechenden Lösung haben die genannten Kohlenwasserstoffe vorzugsweise einen Anteil von maximal 90 ma-% bevorzugt maximal 80 ma-%, besonders bevorzugt maximal 75 ma-%, und insbesondere bevorzugt von maximal 50 ma-%. Wird die Zwischenschicht in Form einer Lösung aufgebracht, so erfolgt die Aufbringung bei Temperaturen von 0 °C bis zu einer Temperatur, die 10 °C unter der des Siedepunkts des Lösungsmittels liegt, vorzugsweise bei 0 bis 80 °C.

Ganz besonders bevorzugt erfolgt der Auftrag aus der Schmelze. Der Auftrag des modifizierten Polyolefins geschieht als Reinsubstanz oder in Form der oben angegebenen Formulierungen in Form einer Schmelze bei Temperaturen zwischen 50 °C und 300 °C, vorzugsweise zwischen 100 °C und 285 °C, besonders bevorzugt zwischen 130 °C und 260 °C und insbesondere bevorzugt zwischen 140 und 250 °C. In einer weiteren ganz besonders bevorzugten Ausführungsform erfolgt der Schmelzeauftrag mindestens eines erfindungsgemäßen Polyolefins in Form einer unterkühlten Schmelze, wobei sich dieser Auftrag insbesondere für temperaturempfindliche Substrate eignet. Die Auftragstemperatur liegt in diesem Fall bei 70 - 170 °C, bevorzugt 75 - 165 °C, besonders bevorzugt 80 - 160 °C und insbesondere bevorzugt bei 85 - 155 °C. Während des Aufheizens bzw. Aufschmelzens empfiehlt sich eine Überlagerung/Beschleierung mit Schutzgas (z. B. Stickstoff, Argon usw.) um die Ausbildung von Gelpartikeln an der Oberfläche zu verhindern. Dazu kann man sich verschiedenster Auftragstechniken wie z. B. Walzenauftrag, Breitschlitzdüse, Rakelauftrag, Punktauftrag, multiline-Auftrag, Rototherm-Auftrag, Sprühauftrag im swirling-Verfahren, durch Spincoating oder breitflächig mit melt blow- bzw. air assisted spray-Verfahren bedienen. Bei der Verwendung der modifizierten Polymere im Sprühauftrag ist insbesondere die Verwendung von Schutzgasen (z. B. Stickstoff, Argon usw.) als Sprühmedium bevorzugt. Die Substrate werden anschließend innerhalb der sogenannten "Offenen Zeit" ("offene Zeit" = Zeitspanne in der die zu verklebenden Teile miteinander verbunden werden können), deren Dauer von der Zusammensetzung der aufgetragenen Mischung abhängig ist, zusammengefügt.

In einer besonderen Ausführungsform wird mindestens eines der modifizierten Polyolefine in Form einer Polymerfolie für den Aufbau der erfindungsgemäßen Laminate verwendet. Dabei kann die Polymerfolie entweder ausschließlich oder aber anteilig aus den modifizierten Polyolefinen bestehen, und/oder mit diesen beschichtet sein. Besonders bevorzugt werden derartige Polymerfolien thermisch (z. B. unter Verwendung von Infrarot- und/oder Mikrowellenstrahlung) aktiviert um einen festen Verbund zu gewährleisten.

Weiterhin können die Polyolefine in den genannten Anwendungen als Formulierung vorliegen. Entsprechende Formulierungen enthalten insbesondere Bestandteile, die zur Erzielung spezieller Eigenschaften, wie z. B. Verformungsfähigkeit, Haftungsvermögen, Verarbeitungsfähigkeit, Vernetzungsgeschwindigkeit, Vernetzungsdichte, (Schmelz- bzw. Lösungs-) Viskosität, Festigkeit, Kristallisationsgeschwindigkeit, Klebrigkeit, Lagerstabilität usw. notwendig sind. Der Anteil der weiteren Bestandteile liegt in einer besonderen Ausführungsform der vorliegenden Erfindung bevorzugt bei maximal 10 ma-%, insbesondere bevorzugt bei < 7,5 ma-% und ganz besonders bevorzugt bei < 5 ma-%. Dies hat den Vorteil, dass die Materialeigenschaften der Formulierung im Wesentlichen die des verwendeten erfindungsgemäßen Polymers sind. Eine solche Formulierung lässt sich mit sehr geringem Aufwand herstellen.

Alternativ kann in einer weiteren Ausführungsform der vorliegenden Erfindung der Anteil der weiteren Bestandteile > 10 ma-% betragen. In diesem Falle machen die weiteren Bestandteile maximal 80 ma-% der Gesamtformulierung, bevorzugt maximal 60 ma-%, besonders bevorzugt maximal 50 ma-%, insbesondere bevorzugt maximal 40 ma-% aus.

Bei den weiteren Bestandteilen kann es sich um Vernetzungsbeschleuniger, insbesondere um Silanolkondensationskatalysatoren, um anorganische und/oder organische Füllstoffe, die wahlweise elektrisch leitfähig oder isolierend sein können, anorganische und/oder organische Pigmente, die wahlweise elektrisch leitfähig oder isolierend sein können, synthetische und/oder natürliche Harze, insbesondere Klebharze, synthetische und/oder natürliche Öle, anorganische und/oder organische, synthetische und/oder natürliche Polymere, die wahlweise elektrisch leitfähig oder isolierend sein können, anorganische und/oder organische, synthetische und/oder natürliche Fasern, die wahlweise elektrisch leitfähig oder isolierend sein können, anorganische und/oder organische Stabilisatoren und/oder anorganische und/oder organische Flammschutzmittel handeln.

Insbesondere umfassen die weiteren Bestandteile Harze, wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kolophonium). Weiterhin kann es sich bei den Harzen um Terpen- bzw. Polyterpenharze, Petroleumharze und/oder Kumaron-Inden-Harze handeln, wobei es sich insbesondere um sogenannte C₅-Harze und/oder C₉-Harze und/oder um Mischpolymerisate aus C₅-/C₉-Harzen handelt. Der Anteil der Harze in der erfindungsgemäßen Formulierung beträgt insbesondere maximal 45 ma-%, bevorzugt zwischen 1 und 40 ma-%, besonders bevorzugt zwischen 2 und 30 ma-% und insbesondere bevorzugt zwischen 3 und 20 ma-%, bezogen auf die Gesamtformulierung.

Weiterhin können in den erfindungsgemäßen Formulierungen klassische amorphe (bzw. teilkristalline) Poly(α-Olefine) (sog. APAOs) als weitere Bestandteile enthalten sein. Bei den genannten amorphen Poly(α-Olefinen) kann es sich um Homo-/Co- und/oder Terpolymere aus Ethylen, Propylen, 1-Buten bzw. linearen und/oder verzweigten 1-Olefinen mit 5 - 20 Kohlenstoffatomen handeln, welche z. B. durch klassische Ziegler-Natta-Katalyse oder Metallocenkatalyse erhältlich sind. Der Anteil der amorphen (bzw. teilkristallinen) Poly(α-Olefine) liegt insbesondere bei maximal 50 ma-%, bevorzugt bei maximal 40 ma-%, und besonders bevorzugt bei maximal 30 ma-%, bezogen auf die Gesamtformulierung. Vorzugsweise handelt es sich bei den weiteren Bestandteilen um kristalline beziehungsweise teilkristalline Polyolefine welche z. B. durch klassische Ziegler-Natta-Katalyse und/oder durch Metallocenkatalyse erhältlich sind, die insbesondere isotaktisches Polypropylen, syndiotaktisches Polypropylen, Polyethylen (HDPE, LDPE und/oder LLDPE), isotaktisches Poly(1-buten), syndiotaktisches Poly(1-buten) deren Copolymere und/oder deren Copolymere mit linearen und/oder verzweigten 1-Olefinen mit 5 bis 10 Kohlenstoffatomen umfassen. Weiterhin ist bevorzugt, dass es sich bei den kristallinen bzw. teilkristallinen Polyolefinen um chemisch modifizierte Polyolefine handelt, wobei die chemische Modifizierung insbesondere solche durch Maleinsäureanhydrid, Itaconsäureanhydrid, Acrylsäure, Acrylate, Methacrylate, ungesättigte Epoxyverbindungen, Silanacrylate, Silane und Hydroxyalkylsilane umfasst.

Weiterhin können die weiteren Bestandteile Polymere mit polaren Gruppen umfassen. Polymere mit polaren Gruppen umfassen Polystyrolcopolymere (z. B. mit Maleinsäureanhydrid, Acrylnitril usw.), Polyacrylate, Polymethacrylate, (Co)polyester, Polyurethane, (Co)polyamide, Polyetherketone, Polyacrylsäure, Polycarbonate sowie chemisch modifizierte Polyolefine (wie z. B. Poly(propylen-graft-maleinsäureanhydrid) oder Poly(propylen-graft-alkoxyvinylsilan). Dabei kann es bei der Vermischung der erfindungsgemäßen Polymere mit den polare Gruppen enthaltenden Polymeren zu einer sofortigen und/oder zeitverzögerten reaktiven Anbindung der Polymerketten kommen, die vorzugsweise dazu führt, dass eine verbesserte Verträglichkeit zwischen den beiden Polymerphasen eintritt, was beispielsweise in einer Verschiebung der Glasübergangstemperaturen der verwendeten Polymere zu erkennen ist. Besonders bevorzugt führt die reaktive Anbindung dazu, dass die Polymerphasen eine gemeinsame Glasübergangstemperatur zeigen, also eine makroskopische Mischbarkeit aufweisen.

Weiterhin können die weiteren Bestandteile Homo- und/oder Copolymere (oder auch Oligomere) auf Basis von Ethylen, Propylen, Acrylnitril, ein Dien und/oder ein cyclisches Dien, Butadien, Styrol und/oder Isopren umfassen, insbesondere handelt es sich bei diesen Polymeren um Blockcopolymere, insbesondere um Kautschuke wie z. B. Natur- und Synthesekautschuk, Poly(butadien), Poly(isopren), Styrol-Butadien-Kautschuk und Nitrilkautschuk. Der Anteil der Polymere auf Basis von Butadien, Styrol, und/oder Isopren beträgt maximal 20 ma-%, bevorzugt 1 - 15 ma-%, besonders bevorzugt 1,5 - 10 ma-% und insbesondere 2 - 9 ma-%, bezogen auf die Formulierungen. Bei Oligomeren handelt es sich bevorzugt um Butadienoligomere.

Weiterhin können die weiteren Bestandteile elastomere Polymere auf Basis von Ethylen, Propylen, einem Dien und/oder *cis,cis*-1,5-Cyclooctadien, *exo-*Dicyclopentadien, *endo*-Dicyclopentadien, 1,4-Hexadien und 5-Ethyliden-2-norbornen umfassen, insbesondere handelt es sich hierbei um Ethylen-Propylen-Rubber, EPM (doppelbindungsfrei, Ethylengehalt 40-75 ma-%) und/oder EPDM. Der Anteil der Polymere auf Basis von Ethylen, Propylen, einem Dien und/oder *cis,cis*-1,5-Cyclooctadien, *exo*-Dicyclopentadien, *endo-*Dicyclopentadien, 1,4-Hexadien und 5-Ethyliden-2-norbornen beträgt üblicherweise maximal 20 ma-%, bevorzugt 1 - 15 ma-%, besonders bevorzugt 1,5 - 10 ma-% und insbesondere 2 - 9 ma-%, bezogen auf die Formulierungen.

Alternativ bzw. ergänzend können die weiteren Bestandteile Wachse umfassen, insbesondere modifizierte und unmodifizierte Wachse, wobei es sich bei diesen vorzugsweise um kristalline, teilkristalline und/oder amorphe Polyolefinwachse auf Basis von Polyethylen, Polypropylen und/oder Poly(1-buten), Paraffinwachse, Metallocenwachse, Mikrowachse, Polyamidwachse, Polytetrafluorethylenwachse und/oder Fischer-Tropsch-Wachse handelt. Der Anteil der Wachse beträgt maximal 50 ma-%, bevorzugt 1 - 40 ma-%, besonders bevorzugt 2 - 30 ma-% und insbesondere bevorzugt 3 - 20 ma-%, bezogen auf die Formulierungen.

Weiterhin können die weiteren Bestandteile Füllstoffe umfassen, wobei die Füllstoffe eingesetzt werden, um spezielle Eigenschaftsprofile der Klebschicht, wie z. B. den Temperaturanwendungsbereich, die Festigkeit, die Schrumpfung, die elektrische Leitfähigkeit, den Magnetismus und/oder die Wärmeleitfähigkeit gezielt an spezifische Anforderungen anzupassen. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Titandioxid, Zinkoxid, Zirkonoxid, Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen, synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Wolle, Baumwolle, Seide, Flachs, Hanf, Jute, und/oder Sisal. Der Anteil der Füllstoffe beträgt maximal 80 ma-%, bevorzugt 1 - 60 ma-%, besonders bevorzugt 5 - 40 ma-% und insbesondere bevorzugt 7 - 30 ma-%, bezogen auf die Formulierungen. Besonders bevorzugt werden Partikel und Fasern eingesetzt, die auf Grund ihrer Dimension nicht zu einer intransparenten Formulierung führen, insbesondere werden sogenannte Nanopartikel eingesetzt.

Ebenfalls können die weiteren Bestandteile Vernetzungsbeschleuniger umfassen. Dies ist besonders dann bevorzugt, wenn die erfindungsgemäßen Polymere in einer Verklebung eingesetzt werden, die in kurzer Zeit nach der Fügung ihre maximale Belastbarkeit erreichen soll. Als Vernetzungsbeschleuniger eignen sich eine Vielzahl von chemischen Verbindungen, insbesondere Brönstedt- und/oder Lewissäuren wie z. B. Essigsäure, Itaconsäure, Zink(II)acetat, Cadmiumacetat, Zinkoxid, Zinkstearat, Zink(II)chlorid, Zinn(IV)chlorid, Dibutylzinnoxid, Dibutylzinndilaurat, Wismutcitrat, Wismut(III)oxid, Wismuttitanat, Tetrabutylgermanium, Tetrabutylzinn, Titanborid, Titan(IV)oxid, Titanacetylacetonat, Tributyltitanat, Natriumchlorid, Magnesium(II)chlorid, Zinkacetylacetonat, Zinkmethacrylat, Zinkniobat, Zinn(II)oxid, Zinn(IV)oxid, Zirkon(IV)acetylacetonat, Zirkon(IV)oxid und/oder Zirkon(IV)silikat.

Ebenfalls können die weiteren Bestandteile Stabilisatoren umfassen, wobei diese eingesetzt werden, um die Formulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen. Geeignete Stabilisatoren sind beispielsweise gehinderte Amine (HALS-Stabilisatoren), gehinderte Phenole, Phosphite und/oder aromatische Amine, wie z. B. unter den Handelsnamen KINOX, IRGANOX, DOVERNOX, IONOL, IRGAPHOS, DOVERPHOS und/oder WESTON kommerziell erhältlich sind. Besonders bevorzugt enthalten die erfindungsgemäß eingesetzten Stabilisatoren nur eine hydrolytisch aktive Endgruppe pro Molekül. In den genannten Formulierungen beträgt der Anteil der Stabilisatoren maximal 3 ma-%, bevorzugt zwischen 0,05 und 2,5 ma-% und insbesondere bevorzugt zwischen 0,1 und 2 ma-%, bezogen auf die Formulierungen. In einer besonderen Ausführungsform erfolgt eine reaktive Anbindung des/der Stabilisators/Stabilisatoren an das erfindungsgemäß modifizierte Polymer, wodurch eine Stabilisatormigration aus der Klebverbindung verhindert wird.

Darüber hinaus können die weiteren Bestandteile ein oder mehrere Öle umfassen, wobei es sich um natürliche und/oder synthetische Öle handeln kann. Diese ein oder mehreren Öle haben vorzugsweise bei der Verarbeitungstemperatur eine Viskosität von 0,1 bis 1000 mPa*s, bevorzugt von 1 - 750 mPa*s, am meisten bevorzugt von 2 - 500 mPa*s. Geeignete Öle sind beispielsweise Mineralöle, (medizinische) Weißöle, Isobutenöle, Butadienöle, hydrierte Butadienöle und/oder Paraffinöle. Der Anteil der ein oder mehreren Öle beträgt maximal 50 ma-%, bevorzugt 1 - 45 ma-%, besonders bevorzugt 3 - 40 ma-% und insbesondere 5 - 38 ma-%, bezogen auf die Formulierungen.

Weiterhin können in den Formulierungen anorganische und/oder organische Pigmente, UV-aktive Substanzen, organische und/oder anorganische Nukleierungsmittel, die die Kristallisation der Polymere beschleunigen enthalten sein.

In einer weiter bevorzugten Form der erfindungsgemäßen Formulierungen handelt es sich bei den vorab beschriebenen Formulierungen um Multiphasenblends.

In einer weiteren Ausführungsform der erfindungsgemäßen Verfahren werden anschließend auf den Laminaten weitere Schichten aufgebracht. Entsprechende Schichten sind bereits vorab beschrieben. Der Auftrag der weiteren Schichten erfolgt beispielsweise mittels Walzenauftrag, Breitschlitzdüse, Rakelauftrag, Punktauftrag, multiline-Auftrag, Rototherm-Auftrag, Sprühauftrag im swirling-Verfahren, durch Spincoating oder breitflächig mit melt blow- bzw. air assisted spray-Verfahren bzw. durch Klebkaschieren, (Rollen)Laminierung, Plasmabeschichtung, PVD- bzw. CVD-Techniken und/oder anderen Druck-, Beschichtungs- bzw. Lackiertechniken. Ein weiterer Gegenstand der vorliegenden Erfindung sind Displays enthaltend Laminate gemäß der vorliegenden Erfindung. Grundsätzlich eignen sich die Laminate für alle Arten von Displays, vorzugsweise handelt es sich bei den Displays um UFB - Displays (Ultra Fine & Bright), TFT - Displays (Thin Film Transistor), TFD - Displays (Thin Film Diode), CSTN - Displays (Color Super Twist Nematic), STN - Displays (Super Twist Nematic), UBC - Displays (Ultra Bright Colour),LCD - Displays (Liquid Crystal Display),OLED - Displays (Organic Light-Emitting Diode), Plasma-Displays-und/oder um Touchscreens. Insbesondere handelt es sich um OLED-Displays die aus Polymeren gefertigt werden (sog. PLED).

Handelt es sich bei den Displays um OLED-Displays, so ist insbesondere die mit zunehmender Vernetzung der erfindungsgemäßen Polyolefine zunehmende Barrierewirkung der Haftungs-/Klebschicht von Vorteil.

Ein weiterer Gegenstand der vorliegenden Erfindung sind flexible elektrische Module enthaltend Laminate gemäß der vorliegenden Erfindung, insbesondere flexible Solarzellen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Analytik:

### a) Hochtemperatur-¹³C-NMR

Die Polymerzusammensetzung, wird über Hochtemperatur-¹³C-NMR bestimmt. Die ¹³C-NMR-Spektroskopie von Polymeren ist beispielsweise in folgenden Publikationen beschrieben:
[1] S. Berger, S. Braun, H.-O. Kalinowski, 13C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J.L. Koenig, Spectroscopy of Polymers, ACS Professional Reference Books, Washington 1992
[4] J.C. Randall, Polymer Sequence Determination, Academic Press, New York 1977
[5] A. Zambelli et al: Macomolecules, 8, 687 (1975)
[6] A. Filho, G.Galland: J.Appl.Polym.Sci., 80, 1880 (2001)

### b) Rheologie

Die Rheologischen Messungen erfolgen gemäß ASTM D 4440-01 ("Standard Test Method for Plastics: Dynamic Mechanical Properties Melt Rheology") unter Verwendung eines Rheometers MCR 501 der Firma Anton Paar mit einer Platte-Platte-Geometrie (Plattendurchmesser: 50 mm) als Oszillationsmessung. Als maximale Probendeformation wird in allen Messungen 1 % verwendet, die temperaturabhängigen Messungen werden bei einer Messfrequenz von 1 Hz und einer Abkühlgeschwindigkeit von 1,5 K/min durchgeführt.
Die Schmelzviskosität wird durch Oszillationsrheometrie bestimmt, wobei mit einer Schergeschwindigkeit von 1 Hz gearbeitet wird. Die maximale Deformation der Probe wird so gewählt, dass sich die Probe während der gesamten Messdauer im linear viskoelastischen Bereich befindet. Die erfindungsgemäßen Polymere zeichnen sich somit u. a. dadurch aus, dass ihre Schmelzen ein viskoelastisches Verhalten zeigen. Viskoelastische Materialien zeichnen sich gegenüber Hookschen Festkörpern durch die Fähigkeit aus, aus einer Deformation resultierende Spannungen über eine bestimmte Zeit dissipativ abzubauen (Relaxation). Im Gegensatz zu Newtonschen Flüssigkeiten, die unter Einwirkung einer Scherung/Dehnung einer ausschließlich irreversiblen Verformung unterliegen, können viskoelastische Fluide einen Teil der Deformationsenergie zurückgewinnen, nachdem die Scherkraft entfernt wurde (sog. "Memory Effekt") [N.P.Cheremisinoff; "An Introduction to Polymer Rheology and Processing"; CRC Press; London; 1993]. Ein weiteres Kennzeichen der Schmelzen der erfindungsgemäßen Polymere ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der Newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d.h. Messung bei fester Frequenz in Abhängigkeit von der Scheramplitude) möglich und notwendig, wenn die Messung im reversiblen, d.h. reproduzierbaren Bereich durchgeführt werden soll [R.S.Lenk; "Rheologie der Kunststoffe", C.Hanser Verlag; München; 1971*;* J.Meissner; "Rheologisches Verhalten von KunststoffSchmelzen und -Lösungen" in: "Praktische Rheologie der Kunststoffe"; VDI-Verlag; Düsseldorf; 1978; J.-F. Jansson; Proc.8th.Int.Congr.Rheol.; 1980; Vol.3*].* Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein strukturviskoses Verhalten zeigen.

### c) Nadelpenetration (PEN)

Die Nadelpenetration wird gemäß DIN EN 1426 bestimmt.

### d) DSC

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet.

### e) Erweichungspunkt (Ring&Kugel)

Die Bestimmung des Erweichungspunktes nach der Ring- und Kugelmethode erfolgt nach DIN EN 1427.

### f) Klebscherfestigkeit

Die Bestimmung der Klebscherfestigkeit erfolgt nach DIN EN 1465.

### g) RFA-Spektroskopie

Die in Alu-Schalen gegossenen und ausgehärteten Proben werden mit einem Stanzeisen (Durchmesser 30 mm) ausgestanzt. Die Bestimmung erfolgt als Doppelbestimmung. Die Schichtdicke der Polymerproben beträgt > 5 mm. Die Proben werden im Probenhalter platziert und vermessen (Messgerät: PANalytical PW 2404). Die quantitative Bestimmung erfolgt gegen eine externe Kalibrierung von Si in Borax-Tabletten.

### h) Xylollöslichkeit

Es wird ein Xylol-Isomerengemisch verwendet, wobei das Polymer unter Rückfluss gelöst und dann die Lösung auf Raumtemperatur abgekühlt wird. 2 g Polyolefin werden in 250 mL Xylol unter Rühren und Heizen bis zum Siedepunkt von Xylol gelöst. Nachdem 20 min unter Rückfluss gekocht wurde, lässt man die Polymerlösung auf 25 °C abkühlen. Ungelöstes bzw. ausgefallenes Polyolefin wird abfiltriert (15 cm-Nutsche, Sartorius 390-Filterpapier) und getrocknet. Die überbleibende Polymerlösung wird in einem 5-fachen Überschuss an Methanol (mit einem Tropfen 37-prozentiger wässriger HCl versetzt) ausgefällt. Der entstehende Niederschlag wird abfiltriert und bei 80 °C im Trockenschrank (Vakuum) getrocknet.

### i) Löslichkeit in THF

Die Löslichkeit in THF ist ein Kennzeichen teilkristalliner Polyolefine. Die Durchführung erfolgt analog zu den Lösungsversuchen in Xylol.

### Beispiele:

**1 Erfindungsgemäß eingesetzte Polyolefine**

| | Bsp.1 | Bsp.2 | Bsp.3 | Bsp.4 | Bsp.5 | Bsp.6 | Bsp.7 | Bsp.8 | Bsp.9 | Bsp.10 |
|---|---|---|---|---|---|---|---|---|---|---|
| C₂-Anteil [ma%] | 4 | 6,5 | 7 | 8 | 5 | 11 | 14 | 1 | 6 | 8,5 |
| C₃-Anteil [ma%] | 68 | 61 | 63,5 | 58 | 66 | 60 | 70 | 0 | 0 | 1 |
| C₄-Anteil [ma%] | 28 | 32,5 | 29,5 | 34 | 29 | 29 | 16 | 99 | 94 | 90,5 |
| η190°C [mPa*s] | 5000 | 2000 | 10700 | 3300 | 14500 | 5600 | 6900 | 4000 | 4500 | 11300 |
| T_{Erw.} [°C] | 98 | 92 | 102 | 91 | 98 | 157 | 158 | 112 | 88 | 99 |
| PEN [0,1 mm] | 19 | 23 | 18 | 22 | 15 | 35 | 26 | 6 | 9 | 10 |
| Tg [°C] | -29 | -36 | -30 | -34 | -32 | -38 | -37 | -39 | -41 | -42 |
| ΔH_{M} [J/g] | 17,8 | 10,7 | 8,5 | 11,8 | 14,2 | 15,6 | 18,4 | 26,7 | 12,8 | 10,4 |
| Si-Geh. [ma%] | 0,35 | 0,45 | 0,30 | 0,55 | 0,35 | 0,50 | 0,45 | 0,65 | 1,0 | 0,60 |
| XSol^{*} [ma%] | 100 | 100 | 99 | 100 | 98 | 95 | 96 | 100 | 100 | 98 |
| THFSol^{**} [ma%] | 100 | 100 | 99 | 100 | 99 | 41 | 22 | 35 | 53 | 46 |

| | | | | | | | | | | |
|---|---|---|---|---|---|---|---|---|---|---|
| *: In Xylol bei Raumtemperatur lösliche Anteile **: in Tetrahydrofuran bei Raumtemperatur lösliche Anteile | | | | | | | | | | |

### 2 Klebwirkung auf Plexiglas (Polymethylmethacrylat, Evonik Röhm GmbH, Formmasse 7N)

Je 100 g der modifizierten Polyolefine werden im Trockenschrank bei 180 °C unter Schutzgasatmosphäre (z. B. Stickstoff, Argon usw.) für 1 Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708 (Fa. Evonik Degussa GmbH) und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polymethylmethacrylatprüfkörper (Dicke: 2 mm, Formmasse "7N", Evonik Röhm GmbH) appliziert. Dieser wird innerhalb von 20 Sekunden mit einem weiteren Polymethylmethacrylatprüfkörper (Dicke: 2 mm, Formmasse "7N", Evonik Röhm GmbH) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.

Bei einer **Verklebungstemperatur von 170 °C** werden folgende Ergebnisse erzielt (Tabelle 2):

| Beispiel Nr. | Verwendetes Polyolefin | Klebscherfestigkeit [N/mm²] |
|---|---|---|
| 12 | VESTOPLAST® 750¹ (nicht erfindungsgemäß) | 0,30 |
| 13 | Nach Beispiel 1 (erfindungsgemäß) | 1,10 |
| 14 | Nach Beispiel 4 (erfindungsgemäß) | 0,55 |
| 15 | Nach Beispiel 5 (erfindungsgemäß) | 0,80 |

| | | |
|---|---|---|
| ¹ Fa. Evonik Degussa GmbH | | |

Bei einer **Verklebungstemperatur von 240 °C** werden folgende Ergebnisse erzielt (Tabelle 3):

| Beispiel Nr. | Verwendetes Polyolefin | Klebscherfestigkeit [N/mm²] |
|---|---|---|
| 16 | VESTOPLAST® 750¹ (nicht erfindungsgemäß) | keine Prüfung |
| 17 | Nach Beispiel 1 (erfindungsgemäß) | 1,60 |
| 18 | Nach Beispiel 4 (erfindungsgemäß) | 0,70 |
| 19 | Nach Beispiel 5 (erfindungsgemäß) | 1,10 |

| | | |
|---|---|---|
| ¹ Fa. Evonik Degussa GmbH | | |

### 3 Klebwirkung auf Polypropylen

Die modifizierten Polyolefine werden bei 190 °C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Polypropylenprüfkörper (Dicke: 2 mm, isotaktisches Polypropylen, "PP-DWST"/ Hersteller: Simona AG) appliziert. Dieser wird innerhalb von 20 Sekunden mit einem weiteren Polypropylenprüfkörper (Dicke: 2 mm, isotaktisches Polypropylen, "PP-DWST"/ Hersteller: Simona AG) auf einer Fläche von 4 cm² einfach überlappend zusammengefügt und 5 Minuten mit einem Gewicht von 2 Kg aneinandergepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 4).

| Beispiel Nr. | Verwendetes Polyolefin | Klebscherfestigkeit [N/mm²] |
|---|---|---|
| 20 | VESTOPLAST® 708¹ (nicht erfindungsgemäß) | 1,05 |
| 21 | Nach Beispiel 1 (erfindungsgemäß) | 1,75 |
| 22 | Nach Beispiel 2 (erfindungsgemäß) | 1,55 |
| 23 | Nach Beispiel 3 (erfindungsgemäß) | 1,55 |
| 24 | Nach Beispiel 4 (erfindungsgemäß) | 2,25 |
| 25 | Nach Beispiel 5 (erfindungsgemäß) | 1,70 |
| 26 | Nach Beispiel 6 (erfindungsgemäß) | 1,2 |
| 27 | Nach Beispiel 7 (erfindungsgemäß) | 1,35 |
| 28 | Nach Beispiel 8 (nicht erfindungsgemäß) | 1,10 |
| 29 | Nach Beispiel 9 (nicht erfindungsgemäß) | 1,55 |
| 30 | Nach Beispiel 10 (erfindungsgemäß) | 1,45 |

| | | |
|---|---|---|
| ¹ Fa. Evonik Degussa GmbH | | |

### 4 Klebwirkung auf Polyethylen

Je 100 g der modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708 (Fa. Evonik Degussa GmbH) und 2 ma-% Dibutylzinndilaurat) zugegeben und 15 min homogenisiert. Anschließend wird die Polymerschmelze bei 170 °C (mit Hilfe eines Thermofühlers) auf einen Polyethylenprüfkörper (Dicke: 2 mm; "PE-HWST", Hersteller: Simona AG) appliziert. Dieser wird innerhalb von 20 Sekunden mit einem weiteren Polyethylenprüfkörper (Dicke: 2 mm; "PE-HWST", Hersteller: Simona AG) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 5).

| Beispiel Nr. | Verwendetes Polyolefin | Klebscherfestigkeit [N/mm²] |
|---|---|---|
| 31 | VESTOPLAST® 750¹ (nicht erfindungsgemäß) | 0,70 |
| 32 | Nach Beispiel 1 (erfindungsgemäß) | 1,48 |
| 33 | Nach Beispiel 4 (erfindungsgemäß) | 0,83 |
| 34 | Nach Beispiel 5 (erfindungsgemäß) | 1,2 |

| | | |
|---|---|---|
| ¹ Fa. Evonik Degussa GmbH | | |

### 5 Klebwirkung auf Poly(ethylenterephthalat) (PET)

Je 100 g der modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708 (Fa. Evonik Degussa GmbH) und 2 ma-% Dibutylzinndilaurat) zugegeben und 15 min homogenisiert. Anschließend wird die Polymerschmelze bei 170 °C (mit Hilfe eines Thermofühlers) auf einen Polyethylenterephthalatprüfkörper (Dicke: 2 mm; "Axpet clear 099", Hersteller: Bayer Material Science) appliziert. Dieser wird innerhalb von 20 Sekunden mit einem weiteren Polyethylenterephthalatprüfkörper (Dicke: 2 mm; "Axpet clear 099", Hersteller: Bayer Material Science) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 6).

| Beispiel Nr. | Verwendetes Polyolefin | Klebscherfestigkeit [N/mm²] |
|---|---|---|
| 35 | VESTOPLAST® 750¹ (nicht erfindungsgemäß) | 0,40 |
| 36 | Nach Beispiel 1 (erfindungsgemäß) | 1,55 |
| 37 | Nach Beispiel 4 (erfindungsgemäß) | 1,23 |
| 38 | Nach Beispiel 5 (erfindungsgemäß) | 1,54 |

| | | |
|---|---|---|
| ¹ Fa. Evonik Degussa GmbH | | |

### 6 Klebwirkung auf Polyamid-6 (PA-6)

Je 100 g der modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708 (Fa. Evonik Degussa GmbH) und 2 ma-% Dibutylzinndilaurat) zugegeben und 15 min homogenisiert. Anschließend wird die Polymerschmelze bei 170 °C (mit Hilfe eines Thermofühlers) auf einen Polyamid-6-prüfkörper (Dicke: 2 mm; "Sustamid 6", Hersteller: Cadillac Plastic) appliziert. Dieser wird innerhalb von 20 Sekunden mit einem weiteren Polyamid-6-prüfkörper (Dicke: 2 mm; "Sustamid 6", Hersteller: Cadillac Plastic) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 7).

| Beispiel Nr. | Verwendetes Polyolefin | Klebscherfestigkeit [N/mm²] |
|---|---|---|
| 39 | VESTOPLAST® 750¹ (nicht erfindungsgemäß) | 0,62 |
| 40 | Nach Beispiel 1 (erfindungsgemäß) | 1,95 |
| 41 | Nach Beispiel 4 (erfindungsgemäß) | 1,30 |
| 42 | Nach Beispiel 5 (erfindungsgemäß) | 2,05 |

| | | |
|---|---|---|
| 1 Fa. Evonik Degussa GmbH | | |

### 7 Klebwirkung auf Polycarbonat

Je 100 g der modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST^{®} 708 (Fa. Evonik Degussa GmbH) und 2 ma-% Dibutylzinndilaurat) zugegeben und 15 min homogenisiert. Anschließend wird die Polymerschmelze bei 170 °C (mit Hilfe eines Thermofühlers) auf einen Polycarbonatprüfkörper (Dicke: 2 mm; "Makrolon Mono", Hersteller: Bayer Material Science) appliziert. Dieser wird innerhalb von 20 Sekunden mit einem weiteren Polycarbonatprüfkörper (Dicke: 2 mm; "Makrolon Mono", Hersteller: Bayer Material Science) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 8).

| Beispiel Nr. | Verwendetes Polyolefin | Klebscherfestigkeit [N/mm²] |
|---|---|---|
| 43 | VESTOPLAST® 750¹ (nicht erfindungsgemäß) | 0,21 |
| 44 | Nach Beispiel 1 (erfindungsgemäß) | 1,20 |
| 45 | Nach Beispiel 4 (erfindungsgemäß) | 0,70 |
| 46 | Nach Beispiel 5 (erfindungsgemäß) | 1,15 |

| | | |
|---|---|---|
| ¹ Fa. Evonik Degussa GmbH | | |

### 8 Klebwirkung auf Glas

Je 100 g der modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST^{®} 708 (Fa. Evonik Degussa GmbH) und 2 ma-% Dibutylzinndilaurat) zugegeben und 15 min homogenisiert. Anschließend wird die Polymerschmelze bei 170 °C (mit Hilfe eines Thermofühlers) auf einen entfetteten Glasprüfkörper (Dicke: 2 mm) appliziert. Dieser wird innerhalb von 20 Sekunden mit einem weiteren entfetteten Glasprüfkörper (Dicke: 2 mm) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster 14 Tage bei 20 °C / 65 % rel. Luftfeuchte im Klimaschrank und wird anschließend mittels Zugprüfung auf seine mechanischen Eigenschaften hin getestet (Tabelle 8).

| Beispiel Nr. | Verwendetes Polyolefin | Klebscherfestigkeit [N/mm²] |
|---|---|---|
| 43 | VESTOPLAST® 708¹ (nicht erfindungsgemäß) | < 0,1 |
| 44 | Nach Beispiel 1 (erfindungsgemäß) | 2,5 |
| 45 | Nach Beispiel 4 (erfindungsgemäß) | 3,7 |
| 46 | Nach Beispiel 5 (erfindungsgemäß) | 3,2 |

| | | |
|---|---|---|
| ¹ Fa. Evonik Degussa GmbH | | |

### 9 Wasserdampfdurchlässigkeit von Polyolefinlaminaten

### Beispiel 47 (nicht erfindungsgemäß):

Mit einem Doppelschneckenextruder ZSK 25 (Firma Werner & Pfleiderer) mit nachgeschaltetem Extrusionswerkzeug für die Herstellung von Blasfolien wird bei 200 °C eine Blasfolie aus einem Hochdruckpolyethylen (LDPE) der Firma SABIC (Sabic LDPE 2101) mit einer Dicke von 0,052 mm hergestellt. Anschließend erfolgt die Bestimmung der Wasserdampfdurchlässigkeit nach DIN 53122 T2. Es wird eine Wasserdampfdurchlässigkeit von 4,6 g/m²*d gemessen.

### Beispiel 48 (nicht erfindungsgemäß):

Mit einem Doppelschneckenextruder ZSK 25 (Firma Werner & Pfleiderer) mit nachgeschaltetem Extrusionswerkzeug für die Herstellung von Flachfolien wird bei 200 °C eine Flachfolie aus einem linearen Polyethylen niedriger Dichte (LLDPE) der Firma SABIC (Sabic LLDPE 3188) mit einer Dicke von 0,048 mm hergestellt. Anschließend erfolgt die Bestimmung der Wasserdampfdurchlässigkeit nach DIN 53122T2. Es wird eine Wasserdampfdurchlässigkeit von 2,8 g/m²*d gemessen.

### Beispiel 49 (nicht erfindungsgemäß):

Mit einem Doppelschneckenextruder ZSK 25 (Firma Werner & Pfleiderer) mit nachgeschaltetem Extrusionswerkzeug für die Herstellung von Flachfolien wird bei 200 °C eine Flachfolie aus einem isotaktischen Polypropylen der Firma SABIC (Sabic PP 520 P) mit einer Dicke von 0,058 mm hergestellt. Anschließend erfolgt die Bestimmung der Wasserdampfdurchlässigkeit nach DIN 53122T2. Es wird eine Wasserdampfdurchlässigkeit von 1,4 g/m²*d gemessen.

### Beispiel 50 (erfindungsgemäß):

Die in Beispiel 47 hergestellte Polyethylenfolie wird mit Hilfe eines 20 µm-Rakels bei einer Temperatur von 135 °C mit einer Schmelze (bestehend aus 100 g erfindungsgemäßem Polymer nach Beispiel 1 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Die beschichtete Folie wird für 7 Tage im Klimaschrank (20 °C / 65 % rel. Luftfeuchte) gelagert. Anschließend erfolgt die Bestimmung der Wasserdampfdurchlässigkeit nach DIN 53122T2. Es wird eine Wasserdampfdurchlässigkeit von < 0,001 g/m²*d gemessen.

### Beispiel 51 (erfindungsgemäß):

Die in Beispiel 48 hergestellte Polyethylenfolie wird mit Hilfe eines 20 µm-Rakels bei einer Temperatur von 135 °C mit einer Schmelze (bestehend aus 100 g erfindungsgemäßem Polymer nach Beispiel 4 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Die beschichtete Folie wird für 7 Tage im Klimaschrank (20 °C / 65 % rel. Luftfeuchte) gelagert. Anschließend erfolgt die Bestimmung der Wasserdampfdurchlässigkeit nach DIN 53122T2. Es wird eine Wasserdampfdurchlässigkeit von < 0,001 g/m²*d gemessen.

### Beispiel 52 (erfindungsgemäß):

Die in Beispiel 48 hergestellte Polypropylenfolie wird mit Hilfe eines 20 µm-Rakels bei einer Temperatur von 135 °C mit einer Schmelze (bestehend aus 100 g erfindungsgemäßem Polymer nach Beispiel 5 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Die beschichtete Folie wird für 7 Tage im Klimaschrank (20 °C / 65 % rel. Luftfeuchte) gelagert. Anschließend erfolgt die Bestimmung der Wasserdampfdurchlässigkeit nach DIN 53122T2. Es wird eine Wasserdampfdurchlässigkeit von < 0,001 g/m²*d gemessen.

### 10. Herstellung von Glas-/Kunststofflaminaten

### Beispiel 53 (erfindungsgemäß):

Eine Dünnglasscheibe (Dicke: 50 µm; Borosilikatglas AF 45; Hersteller: Schott AG) wird mit Hilfe eines 20 µm-Rakels bei einer Temperatur von 135 °C mit einer Schmelze (bestehend aus 100 g erfindungsgemäßem Polymer nach Beispiel 5 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Auf diese Beschichtung wird die in Beispiel 48 hergestellte Polypropylenfolie mit Hilfe einer beheizten Walze (80 °C, Andruck: 500 hPa) laminiert. Die beschichtete Glasscheibe wird für 7 Tage im Klimaschrank (20 °C / 65 % rel. Luftfeuchte) gelagert. Man erhält einen transparenten biegeelastischen Verbund welcher auch nach 50fachem Biegeversuch (Biegeradius: 90 mm) weder delaminiert noch intransparent wird.

### Beispiel 54 (erfindungsgemäß):

Eine Dünnglasscheibe (Dicke: 50 µm, Borosilikatglas D263T; Hersteller: Schott AG) wird mit Hilfe eines 20 µm-Rakels bei einer Temperatur von 135 °C mit einer Schmelze (bestehend aus 100 g erfindungsgemäßem Polymer nach Beispiel 5 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Auf diese Beschichtung wird unmittelbar nach dem Auftrag des erfindungsgemäßen modifizierten Polyolefins eine weitere Dünnglasscheibe (Dicke: 50 µm, Borosilikatglas D263T; Hersteller: Schott AG) laminiert. Das Glaslaminat wird für 7 Tage im Klimaschrank (20 °C / 65% rel. Luftfeuchte) gelagert. Man erhält einen transparenten biegeelastischen Verbund welcher auch nach 50fachem Biegeversuch (Biegeradius: 120 mm) weder delaminiert noch intransparent wird.

### Beispiel 55 (erfindungsgemäß):

Eine dünne PMMA-Scheibe (Dicke: 250 µm) wird mit Hilfe eines 20 µm-Rakels bei einer Temperatur von 240 °C mit einer Schmelze (bestehend aus 100 g erfindungsgemäßem Polymer nach Beispiel 5 und 5 g DBTL-Masterbatch (bestehend aus 98 ma-% VESTOPLAST® 708 (Fa. Evonik Degussa GmbH) und 2 ma-% Dibutylzinndilaurat)) beschichtet, wobei das Auftragsgewicht ca. 11 g/m² beträgt. Auf diese Beschichtung wird die in Beispiel 48 hergestellte Polypropylenfolie mit Hilfe einer beheizten Walze (80 °C, Andruck: 500 hPa) laminiert. Die beschichtete Glasscheibe wird für 7 Tage im Klimaschrank (20 °C / 65% rel. Luftfeuchte) gelagert. Man erhält einen transparenten biegeelastischen Verbund, welcher auch nach 50fachem Biegeversuch (Biegeradius: 120 mm) weder delaminiert noch intransparent wird.

## Patentansprüche

1. Verwendung von mit ein oder mehreren Silanen modifizierten Polyolefinen als Haftvermittler für die Herstellung flächiger Glas/Glas-, Glas/Kunststoff- oder Kunststoff/Kunststoff-Laminate, wobei das Polyolefin ein Terpolymer aus 1 bis 22 Gew.-% Ethen, 1 bis 85 Gew.-% Propen und 7 bis 98 Gew.-% eines Olefins mit 4 - 10 Kohlenstoffatomen ist, wobei die Silane auf das Terpolymer aufgepfropft sind.

2. Verwendung gemäß Anspruch 1, **dadurch gekennzeichnet, dass** die Glas/Glas-, Glas/Kunststoff- oder Kunststoff/Kunststoff-Laminate flexibel sind.

3. Verwendung gemäß Anspruch 1 oder 2, **dadurch gekennzeichnet, dass** die ein oder mehreren Silane ausgewählt sind aus der Gruppe umfassend Vinyltrimethoxysilan, Vinyltriethoxysilan, Vinyl-tris(2-methoxy-ethoxy-)silan, 3-Methacryloxypropyltrimethoxysilan, 3-Methacryloxypropyltriethoxysilan, Vinyldimethylethoxysilan und/oder Vinylmethyldibutoxysilan.

4. Laminate umfassend einen flächigen Glaskörper, welcher zumindest auf einer Seite einen darauf aufgebrachten flächigen Glas- und/oder Kunststoffkörper aufweist, **dadurch gekennzeichnet, dass** zwischen dem Glaskörper und dem Glas- und/oder Kunststoffkörper und/oder zwischen dem Kunststoffkörper und gegebenenfalls einem oder mehreren weiteren Kunststoffkörpern eine Zwischenschicht aus einem oder mehreren mit ein oder mehreren Silanen modifizierten Polyolefin als Haftvermittler vorliegt, wobei das Polyolefin ein Terpolymer aus 1 bis 22 Gew.-% Ethen, 1 bis 85 Gew.-% Propen und 7 bis 98 Gew.-% eines Olefins mit 4 - 10 Kohlenstoffatomen ist und wobei die Silane auf das Terpolymer aufgepfropft sind.

5. Laminate umfassend mindestens einen flächigen Kunststoffkörper eines ersten Kunststoffs, welcher zumindest auf einer Seite mindestens einen weiteren flächigen Kunststoffkörper des gleichen oder eines vom ersten Kunststoffs verschiedenen Kunststoffs aufweist, **dadurch gekennzeichnet, dass** zwischen dem Kunststoffkörper eines ersten Kunststoffs und dem weiteren Kunststoffkörper eine Zwischenschicht aus einem oder mehreren mit ein oder mehreren Silanen modifizierten Polyolefin als Haftvermittler vorliegt, wobei das Polyolefin ein Terpolymer aus 1 bis 22 Gew.-% Ethen, 1 bis 85 Gew.-% Propen und 7 bis 98 Gew.-% eines Olefins mit 4 - 10 Kohlenstoffatomen ist und wobei die Silane auf das Terpolymer aufgepfropft sind.

6. Laminate gemäß Anspruch 4 oder 5, **dadurch gekennzeichnet, dass** die Dicke der Glas- und/oder Kunststoffkörper maximal 8 mm beträgt.

7. Laminate gemäß einem oder mehreren der Ansprüche 4 bis 6, **dadurch gekennzeichnet, dass** die Dicke der Zwischenschicht aus einem oder mehreren mit ein oder mehreren Silanen modifizierten Polyolefin maximal 6,5 mm beträgt.

8. Laminate gemäß einem oder mehreren der Ansprüche 4 bis 7, **dadurch gekennzeichnet, dass** auf den Laminaten weitere Schichten vorliegen.

9. Verfahren zur Herstellung von Laminaten gemäß Anspruch 4, **dadurch gekennzeichnet, dass** auf mindestens einer Seite eines flächigen Glaskörpers eine Zwischenschicht aus einem oder mehreren mit ein oder mehreren Silanen modifizierten Polyolefin als Haftvermittler aufgetragen wird, wobei das Polyolefin ein Terpolymer aus 1 bis 22 Gew.-% Ethen, 1 bis 85 Gew.-% Propen und 7 bis 98 Gew.-% eines Olefins mit 4 - 10 Kohlenstoffatomen ist und wobei die Silane auf das Terpolymer aufgepfropft sind, und auf die mindestens eine Zwischenschicht anschließend mindestens ein flächiger Glas- und/oder Kunststoffkörper aufgebracht wird.

10. Verfahren zur Herstellung von Laminaten gemäß Anspruch 5, **dadurch gekennzeichnet, dass** auf mindestens einer Seite eines flächigen Kunststoffkörper eines ersten Kunststoffs eine Zwischenschicht aus einem oder mehreren mit ein oder mehreren Silanen modifizierten Polyolefin als Haftvermittler aufgetragen wird, wobei das Polyolefin ein Terpolymer aus 1 bis 22 Gew.-% Ethen, 1 bis 85 Gew.-% Propen und 7 bis 98 Gew.-% eines Olefins mit 4 - 10 Kohlenstoffatomen ist und wobei die Silane auf das Terpolymer aufgepfropft sind, und auf die Zwischenschicht anschließend mindestens ein weiterer flächiger Kunststoffkörper des gleichen oder eines vom ersten Kunststoffs verschiedenen Kunststoffs aufgebracht wird.

11. Verfahren gemäß einem oder mehreren der Ansprüche 9 oder 10, **dadurch gekennzeichnet, dass** mindestens eines der modifizierten Polyolefine in Form einer Polymerfolie für den Aufbau der erfindungsgemäßen Laminate verwendet wird.

12. Displays enthaltend Laminate gemäß einem oder mehreren der Ansprüche 4 bis 8.

13. Displays gemäß Anspruch 12, **dadurch gekennzeichnet, dass** es sich bei den Displays um UFB - Displays, TFT - Displays, TFD - Displays, CSTN - Displays, STN - Displays, UBC - Displays, LCD - Displays, OLED - Displays, Plasma-Displays und/oder um Touchscreens handelt.

14. Flexible elektrische Module enthaltend mindestens ein Laminat gemäß einem oder mehreren Ansprüchen 4 bis 8.

15. Flexibles elektrisches Modul gemäß Anspruch 14 **dadurch gekennzeichnet, dass** es sich um eine Solarzelle handelt.

## Claims

1. Use of polyolefins modified with one or more silanes as adhesion promoter for the production of flat glass/glass, glass/plastic or plastic/plastic laminates, wherein the polyolefin is a terpolymer of 1 to 22 wt.% ethene, 1 to 85 wt.% propene and 7 to 98 wt.% of an olefin with 4-10 carbon atoms, wherein the silanes are grafted onto the terpolymer.

2. Use according to Claim 1, **characterized in that** the glass/glass, glass/plastic or plastic/plastic laminates are flexible.

3. Use according to Claim 1 or 2, **characterized in that** the one or more silanes are selected from the group comprising vinyltrimethoxysilane, vinyltriethoxysilane, vinyl-tris(2-methoxy-ethoxy-)silane, 3-methacryloxypropyltrimethoxysilane, 3-methacryloxypropyltriethoxysilane, vinyldimethylethoxysilane and/or vinylmethyldibutoxysilane.

4. Laminates comprising a flat glass body that has at least on one side a flat glass and/or plastic body applied thereto, **characterized in that** an intermediate layer of one or more polyolefin modified with one or more silanes is present as adhesion promoter between the glass body and the glass and/or plastic body and/or between the plastic body and optionally one or more further plastic bodies, wherein the polyolefin is a terpolymer of 1 to 22 wt.% ethene, 1 to 85 wt.% propene and 7 to 98 wt.% of an olefin with 4-10 carbon atoms and wherein the silanes are grafted onto the terpolymer.

5. Laminates comprising at least one flat plastic body of a first plastic, which comprises at least on one side at least a further flat plastic body of the same plastic or of a plastic different from the first plastic, **characterized in that** an intermediate layer of one or more polyolefin modified with one or more silanes is present as adhesion promoter between the plastic body of a first plastic and the further plastic body, wherein the polyolefin is a terpolymer of 1 to 22 wt. % ethene, 1 to 85 wt. % propene and 7 to 98 wt. % of an olefin with 4-10 carbon atoms and wherein the silanes are grafted onto the terpolymer.

6. Laminates according to Claim 4 or 5, **characterized in that** the thickness of the glass and/or plastic body is at most 8 mm.

7. Laminates according to one or more of Claims 4 to 6, **characterized in that** the thickness of the intermediate layer of one or more polyolefin modified with one or more silanes is at most 6.5 mm.

8. Laminates according to one or more of Claims 4 to 7, **characterized in that** further layers are present on the laminates.

9. Method for the production of laminates according to Claim 4, **characterized in that** an intermediate layer of one or more polyolefin modified with one or more silanes is applied as adhesion promoter to at least one side of a flat glass body, wherein the polyolefin is a terpolymer of 1 to 22 wt.% ethene, 1 to 85 wt.% propene and 7 to 98 wt.% of an olefin with 4-10 carbon atoms and wherein the silanes are grafted onto the terpolymer, and at least one flat glass and/or plastic body is then applied to the at least one intermediate layer.

10. Method for the production of laminates according to Claim 5, **characterized in that** an intermediate layer of one or more polyolefin modified with one or more silanes is applied as adhesion promoter to at least one side of a flat plastic body of a first plastic, wherein the polyolefin is a terpolymer of 1 to 22 wt. % ethene, 1 to 85 wt. % propene and 7 to 98 wt.% of an olefin with 4-10 carbon atoms and wherein the silanes are grafted onto the terpolymer, and a further flat plastic body of the same plastic or of a plastic different to the first plastic is then applied to the intermediate layer.

11. Method according to one or more of Claims 9 or 10, **characterized in that** at least one of the modified polyolefins is used in the form of a polymer film for the construction of the laminates according to the invention.

12. Displays containing laminates according to one or more of Claims 4 to 8.

13. Displays according to Claim 12, **characterized in that** the displays are UFB displays, TFT displays, TFD displays, CSTN displays, STN displays, UBC displays, LCD displays, OLED displays, plasma displays and/or touchscreens.

14. Flexible electrical modules containing at least one laminate according to one or more of Claims 4 to 8.

15. Flexible electrical module according to Claim 14, **characterized in that** it is a solar cell.

## Revendications

1. Utilisation de polyoléfines modifiées avec un ou plusieurs silanes en tant que promoteur d'adhésion pour la fabrication de stratifiés plats verre/verre, verre/plastique ou plastique/plastique, la polyoléfine étant un terpolymère de 1 à 22 % en poids d'éthène, 1 à 85 % en poids de propène et 7 à 98 % en poids d'une oléfine contenant 4 à 10 atomes de carbone, les silanes étant greffés sur le terpolymère.

2. Utilisation selon la revendication 1, **caractérisée en ce que** les stratifiés verre/verre, verre/plastique ou plastique/plastique sont flexibles.

3. Utilisation selon la revendication 1 ou 2, **caractérisée en ce que** le ou les silanes sont choisis dans le groupe comprenant le vinyltriméthoxysilane, le vinyltriéthoxysilane, le vinyl-tris(2-méthoxy-éthoxy)silane, le 3-méthacryloxypropyltriméthoxysilane, le 3-méthacryloxypropyltriéthoxysilane, le vinyldiméthyléthoxysilane et/ou le vinylméthyldibutoxysilane.

4. Stratifiés comprenant un corps plat en verre, qui comprend au moins sur un côté un corps plat en verre et/ou en plastique appliqué sur celui-ci, **caractérisés en ce qu'**une couche intermédiaire d'une ou de plusieurs polyoléfines modifiées avec un ou plusieurs silanes est présente en tant que promoteur d'adhésion entre le corps en verre et le corps en verre et/ou en plastique et/ou entre le corps en plastique et éventuellement un ou plusieurs autres corps en plastique, la polyoléfine étant un terpolymère de 1 à 22 % en poids d'éthène, 1 à 85 % en poids de propène et 7 à 98 % en poids d'une oléfine contenant 4 à 10 atomes de carbone, et les silanes étant greffés sur le terpolymère.

5. Stratifiés comprenant au moins un corps plat en plastique d'un premier plastique, qui comprend au moins sur un côté au moins un autre corps plat en plastique du même ou d'un plastique différent du premier plastique, **caractérisés en ce qu'**une couche intermédiaire d'une ou de plusieurs polyoléfines modifiées avec un ou plusieurs silanes est présente en tant que promoteur d'adhésion entre le corps en plastique d'un premier plastique et l'autre corps en plastique, la polyoléfine étant un terpolymère de 1 à 22 % en poids d'éthène, 1 à 85 % en poids de propène et 7 à 98 % en poids d'une oléfine contenant 4 à 10 atomes de carbone, et les silanes étant greffés sur le terpolymère.

6. Stratifiés selon la revendication 4 ou 5, **caractérisés en ce que** l'épaisseur du corps en verre et/ou en plastique est d'au plus 8 mm.

7. Stratifiés selon une ou plusieurs des revendications 4 à 6, **caractérisés en ce que** l'épaisseur de la couche intermédiaire en une ou plusieurs polyoléfines modifiées avec un ou plusieurs silanes est d'au plus 6,5 mm.

8. Stratifiés selon une ou plusieurs des revendications 4 à 7, **caractérisés en ce que** d'autres couches sont présentes sur les stratifiés.

9. Procédé de fabrication de stratifiés selon la revendication 4, **caractérisé en ce qu'**une couche intermédiaire d'une ou de plusieurs polyoléfines modifiées avec un ou plusieurs silanes est appliquée en tant que promoteur d'adhésion sur au moins un côté d'un corps plat en verre, la polyoléfine étant un terpolymère de 1 à 22 % en poids d'éthène, 1 à 85 % en poids de propène et 7 à 98 % en poids d'une oléfine contenant 4 à 10 atomes de carbone, et les silanes étant greffés sur le terpolymère, puis au moins un corps plat en verre et/ou en plastique est appliqué sur ladite au moins une couche intermédiaire.

10. Procédé de fabrication de stratifiés selon la revendication 5, **caractérisé en ce qu'**une couche intermédiaire d'une ou de plusieurs polyoléfines modifiées avec un ou plusieurs silanes est appliquée en tant que promoteur d'adhésion sur au moins un côté d'un corps plat en plastique d'un premier plastique, la polyoléfine étant un terpolymère de 1 à 22 % en poids d'éthène, 1 à 85 % en poids de propène et 7 à 98 % en poids d'une oléfine contenant 4 à 10 atomes de carbone, et les silanes étant greffés sur le terpolymère, puis au moins un autre corps plat en plastique du même ou d'un plastique différent du premier plastique est appliqué sur la couche intermédiaire.

11. Procédé selon une ou plusieurs des revendications 9 ou 10, **caractérisé en ce qu'**au moins une des polyoléfines modifiées est utilisée sous la forme d'un film polymère pour la formation des stratifiés selon l'invention.

12. Écrans contenant des stratifiés selon une ou plusieurs des revendications 4 à 8.

13. Écrans selon la revendication 12, **caractérisés en ce que** les écrans sont des écrans UFB, des écrans TFT, des écrans TFD, des écrans CSTN, des écrans STN, des écrans UBC, des écrans LCD, des écrans OLED, des écrans plasma et/ou des écrans tactiles.

14. Modules électriques flexibles contenant au moins un stratifié selon une ou plusieurs des revendications 4 à 8.

15. Module électrique flexible selon la revendication 14, **caractérisé en ce qu'**il s'agit d'une cellule solaire.
